# EUROPÄISCHE PATENTSCHRIFT

(11) **EP 3 342 320 B1**
(45) Veröffentlichungstag und Bekanntmachung des Hinweises auf die Patenterteilung: **24.07.2019**
(21) Anmeldenummer: 18150019.0
(22) Anmeldetag: 02.01.2018
(51) Int. Cl.: A47J 37/07

(54) **PORTABLES GRILLGERÄT**
PORTABLE GRILL DEVICE
GRIL PORTABLE

(30) Priorität: 03.01.2017 CH 42017; 27.09.2017 CH 11812017
(43) Veröffentlichungstag der Anmeldung: 04.07.2018
(73) Patentinhaber: Mehrweg GmbH, 9491 Ruggell (LI)
(72) Erfinder: GUERIG, Severin, 5415 Rieden (CH)
(74) Vertreter: Herrmann, Johanna

(56) Entgegenhaltungen:
- CN-A- 106 724 919
- CN-U- 201 683 763
- DE-A1- 19 729 574
- US-A- 3 010 809
- US-A1- 2006 144 383
- US-A1- 2006 219 233
- US-B2- 6 883 512

## Beschreibung

Die vorliegende Erfindung betrifft ein portables Grillgerät zum Garen von Lebensmitteln, insbesondere ein Taschengrillgerät.

In der US 6 883 512 B2 ist eine portable Grillanordnung gezeigt, die am Einsatzort werkzeugfrei zusammengebaut werden kann. Hierzu weist der Grill ein rechteckiges Fundament auf, auf welchem vier Seitenwände angeordnet sind, auf denen ein Grillrost platziert werden kann. Da die Seitenwände lose auf dem Fundament angeordnet sind, muss dieser Grill auf einem im Wesentlichen horizontalen Boden eingesetzt werden. Zudem befindet sich eine Wasserschale im Inneren der Seitenwände, sodass ein versehentlicher Stoss dazu führen kann, dass das Wasser auskippt und die Flamme oder Glut löscht, bevor der Garvorgang abgeschlossen ist.

Daher besteht Bedarf an einem Grillgerät, welches portabel ist, unmittelbar einsatzbereit, sowie einen minimalen Platzbedarf aufweist. Es besteht weiterhin Bedarf an einem portablen Grillgerät, welches wiederverwendbar ist. Das Dokument CN201683763U zeigt ein kompaktes Grillgerät, welches eine Feuerungsschublade aufweist, die zum Anfeuern ausziehbar ist. Die Feuerungsschublade kann mit der Glut unter den Grillrost geschoben werden, was eine kompakte Bauweise ergibt. Da dieses Grillgerät während des Anfeuerns eine ausgezogene Feuerungsschublade aufweist, kann dieses Grillgerät instabil werden, wenn ein schwerer Brennstoff verwendet wird und ist daher insbesondere in der freien Natur mit entsprechender Vorsicht zu gebrauchen, weil die Gefahr besteht, dass die beladene Feuerungsschublade kippen kann. Dokument US 2006/0144383 A1 zeigt einen portablen Grill, bei dem durch Aufklappen des Gehäuses eine Grillfläche entsteht, die der doppelten Gehäusefläche im zusammengeklappten Zustand entspricht.

Aufgabe der Erfindung ist es, ein portables Grillgerät bereitzustellen, das wiederverwertbar ist einen geringen Platzbedarf aufweist sowie unmittelbar einsatzbereit sowie auf beliebigem Terrain verwendbar ist. Insbesondere soll das portable Grillgerät eine Grillfläche aufweisen, die grösser sein kann als die Grundfläche des portablen Grillgeräts für dessen Transport. Insbesondere soll das Grillgerät in einem Tagesrucksack Platz finden können.

Die Lösung der Aufgaben der Erfindung erfolgt durch ein portables Grillgerät gemäss Anspruch 1. Vorteilhafte Varianten des portablen Grillgeräts sind Gegenstand der Ansprüche 2 bis 15.

Wenn der Begriff "beispielsweise" in der nachfolgenden Beschreibung verwendet wird, bezieht sich dieser Begriff auf Ausführungsbeispiele und/oder Ausführungsformen, was nicht notwendigerweise als eine bevorzugtere Anwendung der Lehre der Erfindung zu verstehen ist. In ähnlicher Weise sind die Begriffe "vorzugsweise", "bevorzugt" zu verstehen, indem sie sich auf ein Beispiel aus einer Menge von Ausführungsbeispielen und/oder Ausführungsformen beziehen, was nicht notwendigerweise als eine bevorzugte Anwendung der Lehre der Erfindung zu verstehen ist. Dementsprechend können sich die Begriffe "beispielsweise", "vorzugsweise" oder "bevorzugt" auf eine Mehrzahl von Ausführungsbeispielen und/oder Ausführungsformen beziehen.

Die nachfolgende detaillierte Beschreibung enthält verschiedene Ausführungsbeispiele für das erfindungsgemässe Grillgerät. Die Beschreibung eines bestimmten Grillgeräts ist nur als beispielhaft anzusehen. In der Beschreibung und den Ansprüchen werden die Begriffe "enthalten", "umfassen", "aufweisen" als "enthalten, aber nicht beschränkt auf.." interpretiert.

Demnach betrifft vorliegende Erfindung ein portables Grillgerät, wobei das portable Grillgerät ein erstes Gehäuseelement und ein zweites Gehäuseelement zur Aufnahme eines Brennstoffs umfasst. Das erste Gehäuseelement ist in das zweite Gehäuseelement einschiebbar. Das portable Grillgerät kann somit auf das mindestens anderthalbfache seiner Minimalgrösse vergrössert werden, wenn sich das erste und zweite Gehäuseelement im ausgezogenen Zustand befinden. Im eingeschobenen Zustand ist das portable Grillgerät bequem in einem Tagesrucksack verstaubar. Das portable Grillgerät kann beispielsweise in einem Stoffbeutel transportiert werden. Das erste Gehäuseelement und das zweite Gehäuseelement weisen je eine Seitenfläche zur Auflage von Grillgut auf, sodass im zumindest teilweise ausgeschobenen Zustand die Seitenfläche des ersten Gehäuseelements um den Anteil, um welchen das erste Gehäuseelement aus dem zweiten Gehäuseelement ausgeschoben ist, vergrössert ist. Insbesondere können das erste und zweite Gehäuseelement auseinandergezogen werden. Beispielsweise kann ein zweiteiliges Grillbesteck dazu verwendet werden, um das erste und zweite Gehäuseelement relativ zueinander zu verschieben, das heisst insbesondere um das erste Gehäuseelement und das zweite Gehäuseelement vom eingeschobenen Zustand in den zumindest teilweise ausgeschobenen Zustand zu bewegen.

Nach einem Ausführungsbeispiel weisen das erste und zweite Gehäuseelement einen Innenraum auf, der einen Brennstoff enthalten kann. Der Innenraum zur Verteilung des Brennstoffs kann vergrössert sein, wenn sich das erste Gehäuseelement und das zweite Gehäuseelement im zumindest teilweise ausgeschobenen Zustand befinden. Somit kann der Brennstoff im gesamten Innenraum verteilbar sein. Insbesondere können die Seitenfläche des ersten Gehäuseelements und die Seitenfläche des zweiten Gehäuseelements, die zur Auflage von Grillgut bestimmt sind, als gemeinsame Grillfläche genutzt werden. Das heisst, die Grillfläche kann um bis auf die doppelte Grösse vergrössert werden, wenn das erste und zweite Gehäuseelement vollständig ausgeschoben sind. Insbesondere kann das portable Grillgerät im eingeschobenen Zustand des ersten und zweiten Gehäuseelements ein minimales Volumen aufweisen und im zumindest teilweise ausgeschobenen Zustand ein grösseres Volumen als das minimale Volumen aufweisen.

Nach einem Ausführungsbeispiel sind erste und zweite Gehäuseelement im ausgeschobenen Zustand mittels eines Fixierungselements arretierbar.

Das erste Gehäuseelement und das zweite Gehäuseelement können nach einem Ausführungsbeispiel quaderförmig ausgebildet sein. Nach einem Ausführungsbeispiel weisen das erste Gehäuseelement und das zweite Gehäuseelement eine Grundfläche sowie eine Mantelfläche auf. Insbesondere kann die Mantelfläche einen rechteckförmigen Querschnitt aufweisen, wobei die Mantelfläche vier Seitenflächen aufweist. Eine der Seitenflächen kann eine Mehrzahl von Ausnehmungen enthalten. Nach einem Ausführungsbeispiel weist zumindest eine der Seitenflächen, welche die Grillfläche ausbilden können, eine Mehrzahl von Ausnehmungen auf, durch welche Luft zirkulieren kann. Insbesondere kann durch die Ausnehmungen Luft zugeführt werden, um den Verbrennungsvorgang in Gang zu bringen oder heisse Luft durch die Ausnehmungen ausströmen, um das Grillgut zu erwärmen.

Nach einem Ausführungsbeispiel kann das Fixierungselement zum Eingriff in zumindest eine der Ausnehmungen der Seitenfläche oder in eine zusätzliche Öffnung des zweiten Gehäuseelements bestimmt sein.

Eine der Seitenflächen kann eine Öffnung enthalten, welche zur Zufuhr oder zur Entnahme eines Brennstoffs oder eines Brennstoffrückstands ausgebildet ist, welche verschliessbar sein kann. Nach einem Ausführungsbeispiel kann die Grundfläche ein Ständerelement enthalten. Mittels des Ständerelements kann das portable Grillgerät hochkant auf einer Unterlage abgestellt werden, um beispielsweise eine verbesserte Luftzufuhr während des Anfeuerungsvorgangs zu erzielen. Hochkant bedeutet dabei, dass die Grundfläche die der Unterlage nächstgelegene Fläche des portablen Grillgeräts ist. Das portable Grillgerät kann auch ein Ständerelement umfassen, mittels welchem das Grillgerät derart auf einer Unterlage abgestellt werden kann, dass eine der Seitenflächen die die der Unterlage nächstgelegene Fläche des portablen Grillgeräts ist.

Insbesondere kann die Seitenfläche, welche der Seitenfläche, welche eine Mehrzahl von Ausnehmungen enthält, gegenüberliegt, als die der Unterlage nächstgelegene Fläche des portablen Grillgeräts ausgebildet sein. Die Verwendung eines Ständerelements oder einer Mehrzahl von Ständerelementen ist insbesondere auch geeignet, die beiden Gehäuseelemente in einem Abstand zur Unterlage anzuordnen. Hierdurch kann eine unzulässige Erwärmung der Unterlage vermieden werden. Insbesondere kann eine Entzündung der Unterlage vermieden werden, sodass der Gebrauch des portablen Grillgeräts auch bei trockenen, leicht brennbaren Unterlagen oder hitzeempfindlichen Unterlagen ohne Einschränkung möglich ist.

Nach einem Ausführungsbeispiel weist die Mantelfläche eine Höhe H, eine Breite B und eine Länge L aufweist, wobei die Höhe H maximal 150 mm, vorzugsweise maximal 120 mm beträgt oder wobei die Länge L maximal 150 mm, vorzugsweise maximal 120 mm beträgt oder wobei die Breite B maximal 100 mm, vorzugsweise maximal 70 mm beträgt.

Ein System zum Garen von Lebensmitteln umfasst ein portables Grillgerät nach einem der vorhergehenden Ausführungsbeispiele sowie einen Beutel, welcher zur Aufnahme eines Brennstoffs ausgebildet ist. Nach einem Ausführungsbeispiel ist der Beutel brennbar oder enthält ein brennbares Material, beispielsweise ein Anzündmittel und den Brennstoff.

Der Beutel kann in den Innenraum des Mantelelements des ersten Gehäuseelements einlegbar sein. Insbesondere kann sich der Beutel während des Transportvorgangs des portablen Grillgeräts bereits im Innenraum befinden, insbesondere bevor das Mantelelement des ersten Gehäuseelements in das Mantelelement des zweiten Gehäuseelements eingeschoben wird, um das portable Grillgerät für den Transport vorzubereiten. Der Beutel kann somit im zusammengeschobenen Zustand der Gehäuseelemente eingelegt werden. Wenn eine der Grundflächen als ein abnehmbares Deckelelement ausgebildet ist, kann der Beutel bei geöffnetem Deckelelement in den vom Mantelelement des ersten Gehäuseelements begrenzten Innenraum eingelegt werden. Das Deckelelement kann anschliessend für den Transport oder den Grillvorgang geschlossen werden.

Nach einem Ausführungsbeispiel enthält das System ein Messerelement und ein Gabelelement. Das Messerelement und das Gabelelement können zusammensteckbar sein, sodass aus dem Messerelement und dem Gabelelement eine Grillzange gebildet werden kann. Insbesondere kann die Länge des Messerelements und die Länge des Gabelelements maximal der Höhe der Mantelfläche des zweiten Gehäuseelements entsprechen, sodass für den Transport des Messerelements und des Gabelelements kein zusätzlicher Stauraum erforderlich ist. Nach einem Ausführungsbeispiel kann die Breite des Gabelelements im Wesentlichen der Breite B der Mantelfläche des zweiten Gehäuseelements entsprechen.

Das portable Grillgerät kann mit Brennstoff, beispielsweise mit Kohle, Holzkohle, Briketts befüllt werden. Alternativ kann das portable Grillgerät mit einem Beutel befüllt werden. Der Beutel kann einen Brennstoff und ein Anzündmittel enthalten. Der Beutel ist daher als ein Nachfüllpaket ausgebildet.

Nach Abschluss des Füllvorgangs können das erste Gehäuseelement und das zweite Gehäuseelement zusammengeschoben werden. Hierzu werden die Mantelflächen des ersten Grillelements und des zweiten Grillelements ineinandergeschoben. Insbesondere kann in diesem Zustand der Innenraum des ersten und zweiten Gehäuseelements des portablen Grillgeräts komplett geschlossen sein.

Um den Anzündvorgang in Gang zu setzen oder zu beschleunigen, kann vor dem Start des Anzündvorgangs das portable Grillgerät hochkant aufgestellt werden und ein paar Zentimeter auseinandergezogen werden. Sobald der Brennstoff zumindest teilweise in eine Glut umgewandelt ist, kann das portable Grillgerät beispielsweise mit dem Gabelelement und dem Messerelement komplett auseinandergezogen werden, so dass die Grillfläche vergrössert werden kann, insbesondere im Wesentlichen verdoppelt werden kann. Mit dem Messerelement oder dem Gabelelement kann die Glut gleichmässig verteilt werden. Das Gabelelement und das Messerelement können zu einer Grillzange zusammengesteckt werden.

Wenn das portable Grillgerät erneut benutzt werden soll, kann das portable Grillgerät hochkant aufgestellt werden und mit einem Nachfüllpaket über die als abnehmbares Deckelelement ausgebildete Grundfläche des zweiten Gehäuseelements nachgefüllt werden.

Nach dem Abkühlen kann das portable Grillgerät ganz zusammengeschoben werden. Der Brennstoff, beispielsweise die abgekühlte Holzkohle, kann im Innenraum des ersten und zweiten Gehäuseelements verbleiben und kann zu Hause im Kompost entsorgt werden, das portable Grillgerät kann im Geschirrspüler gereinigt werden.

Ein Nachfüllpaket kann einen Beutel umfassen, der mit dem Brennstoff und gegebenenfalls einer Anzündhilfe befüllt ist. Der Beutel kann insbesondere einen Papiersack umfassen, insbesondere aus Recyclingpapier, beispielweise Zeitungen. Im Beutel kann ein Anzündmittel, beispielsweise Wachsanzündwolle eingelegt sein und der Beutel kann einen Brennstoffenthalten, beispielsweise mit Holzkohle aufgefüllt sein. Ein Beutel der Holzkohle enthält, eignet sich für schnelles, kurzes Grillen. Ein Beutel, der Briketts enthält, kann eingesetzt werden, wenn eine längere Grillzeit gewünscht ist, da die Briketts zwar weniger schnell glühen, dafür aber ihre Wärme über einen längeren Zeitraum abgeben. Der Beutel wird verschlossen, beispielsweise durch eine Klebeverbindung oder genäht wie es beispielsweise für Kohlesäcke bekannt ist. Der Beutel kann eine optische Kennzeichnung aufweisen, welche den Benutzer darauf hinweist, für welche Grillanwendung der Beutel besonders geeignet ist. Insbesondere kann der Beutel durch farbliche Kennzeichnung, Beschriftung gekennzeichnet sein. Nach einem Ausführungsbeispiel kann der Beutel mit einem Stempel versehen werden, der eine Typenbezeichnung, eine Markenbezeichnung oder Hinweise für den Gebrauch enthalten kann, beispielsweise einen Hinweis « Aufreissen vor dem Anzünden».

Nach einem Ausführungsbeispiel liegt das Gesamtgewicht des portablen Grillgeräts bei maximal 0.6 kg, vorzugsweise maximal 0.5 kg, bevorzugt maximal 0.3 kg. Wenn das erste und zweite Gehäuseelement ineinandergeschoben sind, kann das portable Grillgerät in eine Aussentasche eines Rucksacks passen. Gemäss einem Ausführungsbeispiel beträgt die Länge des portablen Grillgeräts 110 mm, die Breite 50 mm und die Höhe 100 mm. Gemäss einem Ausführungsbeispiel beträgt die Länge des portablen Grillgeräts 120 mm, die Breite 70 mm und die Höhe 120 mm. Insbesondere kann das portable Grillgerät durch Zusammenschieben derart verschlossen sein, dass er mit Grillkohle gefüllt in einem Stoffsäckchen im Aussenbereich des Rucksacks transportiert werden kann ohne den Rucksack zu verschmutzen.

Ein Vorteil des portablen Grillgeräts nach einem der vorhergehenden Ausführungsbeispiele ist seine kostengünstige und einfache Herstellung. Die Gehäuseelemente können mittels eines Laserverfahrens oder eines Stanzverfahrens hergestellt sein. Sie werden gebogen, insbesondere die Mantelflächen der Gehäuseelemente. Unlösbare Verbindungen werden beispielsweise durch ein Punktschweissverfahren hergestellt. Vorteilhafterweise beträgt die Wandstärke der Gehäuseelemente maximal 1 mm, vorzugsweise maximal 0.8 mm, besonders bevorzugt maximal 0.6 mm. Für eine gewichtsoptimierte Variante des portablen Grillgeräts hat sich eine Wandstärke von 0.5 mm als besonders vorteilhaft erwiesen. Die Gehäuseelemente können insbesondere aus einem Stahl der Werkstoffklasse 1.4301 oder 1.4310 bestehen. Das portable Grillgerät besteht insbesondere aus zwei Einzelteilen, nämlich dem ersten und zweiten Gehäuseelement. Das System kann zusätzlich einen Stoffbeutel für den Transport, ein Messerelement, ein Gabelelement sowie einen Beutel für den Brennstoff umfassen.

Das portable Grillgerät kann als Bestandteil eines kleinen leicht zu transportierenden Systems im Rucksack oder einer Tasche mitgenommen werden. Am Ausgangsort kann das erste Gehäuseelement mit einem Brennstoff und einem Zündmittel, beispielsweise einem Anzündwürfel, Anzündwolle sowie Holzkohle befüllt werden. Insbesondere kann die Befüllung derart vorgenommen werden, dass das Anzündmittel, insbesondere der Anzündwürfel auf der geschlossenen Seite liegt und der Rest des Gehäuseelements mit Brennstoff, beispielsweise Holzkohle befüllt wird. Danach wird das zweite Gehäuseelement über das erste Gehäuseelement gestülpt, beispielsweise über das erste Gehäuseelement gestossen, sodass das portable Grillgerät vollständig verschlossen ist. Danach wird das portable Grillgerät im Stoffbeutel versorgt und ist bereit für den Einsatz.

Das portable Grillgerät kann somit als Grill, insbesondere als Taschengrill, verwendet werden, um schnell und einfach mit möglichst wenig Hilfsmitteln ein Lebensmittel zu garen. Das portable Grillgerät kann an beliebigen Orten zum Einsatz kommen, insbesondere auch an Orten, an welchen kein Brennstoff zur Verfügung steht. Am Einsatzort kann das portable Grillgerät ungefähr 2 cm auseinandergezogen werden und hochkant aufgestellt werden, wobei das Anzündmittel zuunterst angeordnet ist. Das portable Grillgerät kann vorteihafterweise auf einer feuerfesten Unterlage abgestellt werden, beispielsweise einem Stein. Das Anzündmittel kann angezündet werden, wodurch der Brennstoff sich ebenfalls entzündet. Durch den Kamin-Effekt glüht der Brennstoff, insbesondere die Kohle oder Holzkohle innerhalb ungefähr 10 min. Danach kann das portable Grillgerät mittels einer eines Messerelements oder Gabelelements oder einer Grillzange, die aus dem Messerelement und Gabelelement erhältlich ist, vollständig auseinandergezogen werden. Hierdurch kann die Grillfläche im Wesentlichen verdoppelt werden. Nach Abschluss des Grillvorgangs können Verbrennungsrückstände, beispielsweise Asche, entleert werden. Das portable Grillgerät selbst kann als Mehrweggrill mehrmals verwendet werden und erzeugt somit keinen Abfall. Das portable Grillgerät kann nach Gebrauch wieder in den Stoffsack verpackt werden und kann zu Hause in einer Spülmaschine gereinigt werden.

Nachfolgend wird das erfindungsgemässe portable Grillgerät sowie ein System zum Garen von Lebensmitteln anhand einiger Ausführungsbeispiele dargestellt. Es zeigen
Fig. 1a eine Ansicht eines Gabelelements für ein System zum Garen von Lebensmitteln gemäss einem ersten Ausführungsbeispiel,
Fig. 1b eine Aufsicht auf das Gabelelement gemäss Fig. 1a,
Fig. 1c eine Seitenansicht auf das Gabelelement gemäss Fig. 1a,
Fig. 2a eine Ansicht eines Messerelements für ein System zum Garen von Lebensmitteln gemäss einem ersten Ausführungsbeispiel,
Fig. 2b eine Aufsicht auf das Messerelement gemäss Fig. 2a,
Fig. 2c eine Seitenansicht auf das Messerelement gemäss Fig. 2a,
Fig. 3a eine Ansicht eines ersten Ausführungsbeispiels eines portablen Grillgeräts,
Fig. 3b eine Ansicht des portablen Grillgeräts gemäss Fig. 3a in stehender, ausgezogener Stellung,
Fig. 3c eine Ansicht des portablen Grillgeräts gemäss Fig. 3a in stehender, eingezogener Stellung,
Fig. 4a eine Ansicht eines zweiten Gehäuseelements gemäss einer der Fig. 3a-3c,
Fig. 4b eine Ansicht des zweiten Gehäuseelements gemäss Fig. 4a,
Fig. 4c eine Aufsicht des zweiten Gehäuseelements gemäss Fig. 4a,
Fig. 4d eine Seitenansicht des zweiten Gehäuseelements gemäss Fig. 4a,
Fig. 5a eine Ansicht eines ersten Gehäuseelements gemäss einer der Fig. 3a-3c,
Fig. 5b eine Aufsicht des zweiten Gehäuseelements gemäss Fig. 5a,
Fig. 5c eine Seitenansicht des zweiten Gehäuseelements gemäss Fig. 5a,
Fig. 6 eine Ansicht eines Gabelelements für ein System zum Garen von Lebensmitteln gemäss einem zweiten Ausführungsbeispiel,
Fig. 7 eine Ansicht eines Messerelements für ein System zum Garen von Lebensmitteln gemäss einem zweiten Ausführungsbeispiel,
Fig. 8a eine Ansicht einer Grillzange für ein System zum Garen von Lebensmitteln gemäss dem zweiten Ausführungsbeispiel,
Fig. 8b ein Detail der Grillzange gemäss Fig. 8a,
Fig. 9a eine Ansicht eines zweiten Ausführungsbeispiels eines portablen Grillgeräts,
Fig. 9b ein Detail des portablen Grillgeräts gemäss Fig. 9a,
Fig. 9c ein Detail des portablen Grillgeräts gemäss Fig. 9a,
Fig. 9d ein Detail des portablen Grillgeräts gemäss Fig. 9a,
Fig. 9e ein Detail des portablen Grillgeräts gemäss Fig. 9a,
Fig. 9f ein Detail einer Variante des portablen Grillgeräts gemäss Fig. 9a,
Fig. 10a eine Ansicht eines zweiten Gehäuseelements gemäss einer der Fig. 9a-9e,
Fig. 10b ein Detail des zweiten Gehäuseelements gemäss einer der Fig. 9a-9e,
Fig. 10c eine Aufsicht des zweiten Gehäuseelements gemäss einer der Fig. 9a-9e,
Fig. 10d eine Abwicklung des zweiten Gehäuseelements gemäss einer der Fig. 9a-9e,
Fig. 10e eine Seitenansicht des zweiten Gehäuseelements gemäss einer der Fig. 9a-9e,
Fig. 10f ein Detail der Fig. 10e gemäss einer Variante der Fig. 9a-9e,
Fig. 11a eine Ansicht eines ersten Gehäuseelements gemäss einer der Fig. 9a-9e,
Fig. 11b eine Seitenansicht des ersten Gehäuseelements gemäss einer der Fig. 9a-9e,
Fig. 11c eine Aufsicht des ersten Gehäuseelements gemäss einer der Fig. 9a-9e,
Fig. 12a eine Seitenansicht eines Beutels,
Fig. 12b eine Vorderansicht auf einen Beutel,
Fig. 12c eine teilweise geschnittene Ansicht eines Beutels.

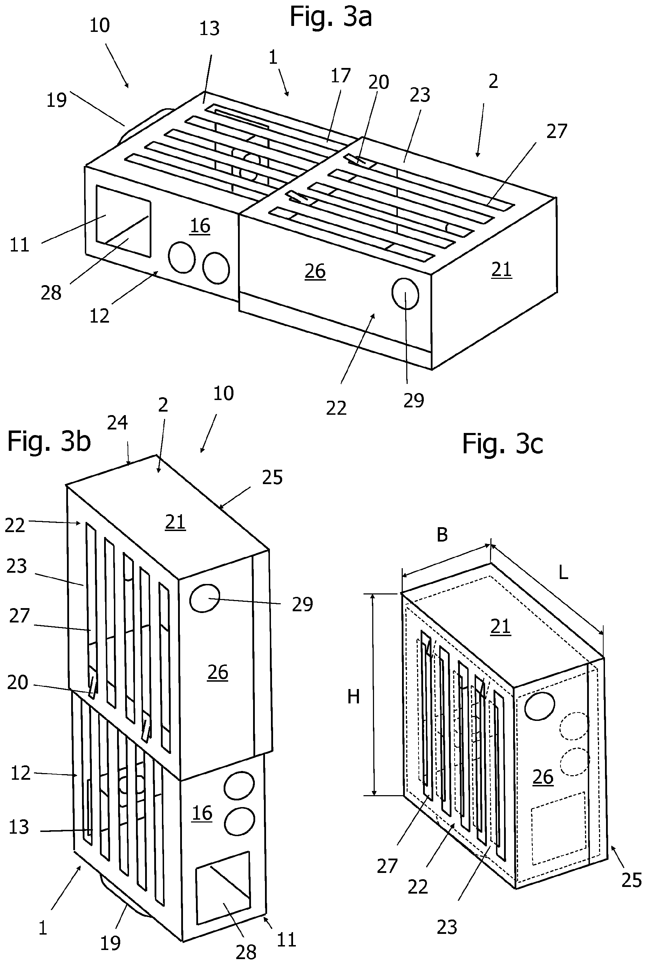

Ein System zum Garen von Lebensmitteln umfasst ein portables Grillgerät beispielsweise nach einem der Ausführungsbeispiele gemäss Fig. 3a, Fig. 3b, Fig. 3c, Fig. 4a, Fig. 4b, Fig. 4c, Fig. 5a, Fig. 5b, Fig. 5c sowie ein Gabelelement 3 oder ein Messerelement 4.

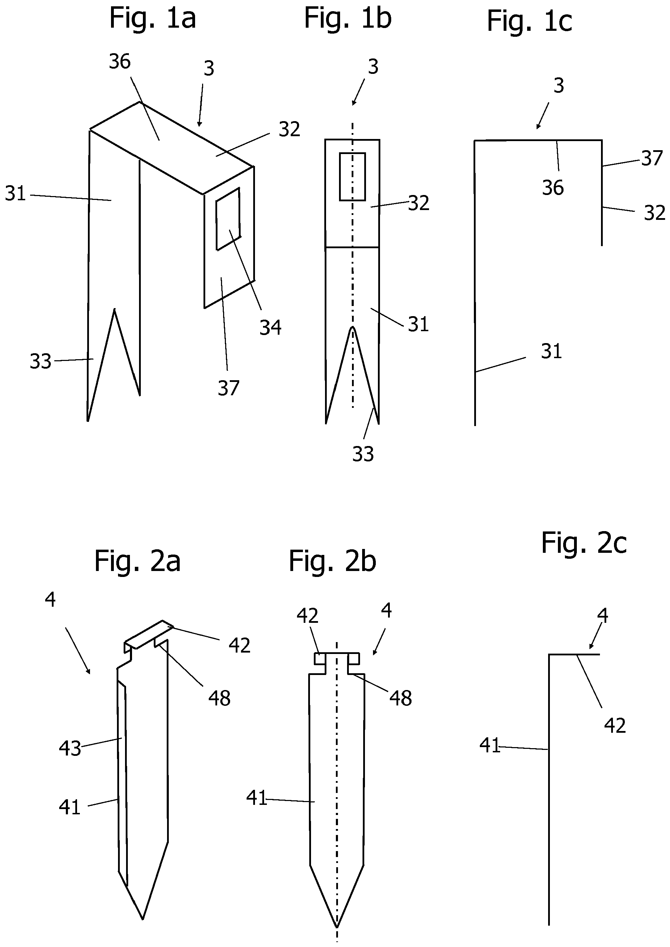

Fig. 1a zeigt eine Ansicht eines Gabelelements 3 für ein System zum Garen von Lebensmitteln gemäss einem ersten Ausführungsbeispiel. Das Gabelelement 3 umfasst einen ersten Gabelarm 31, welcher eine Gabelspitze 33 enthält sowie einen zweiten Gabelarm 32. Der zweite Gabelarm 32 weist gemäss diesem Ausführungsbeispiel einen Knick auf, welcher den zweiten Gabelarm in zwei Gabelarmabschnitte teilt. Der erste Gabelarmabschnitt 36 ist normal zum ersten Gabelarm 31 angeordnet. Der zweite Gabelarmabschnitt 37 ist normal zum ersten Gabelarmabschnitt 36 angeordnet. Der zweite Gabelarmabschnitt 37 ist parallel zum ersten Gabelarm 31 angeordnet. Der zweite Gabelarmabschnitt 37 enthält eine Aufnahmeausnehmung 34. Die Aufnahmeausnehmung 34 ist gemäss diesem Ausführungsbeispiel als eine Öffnung mit rechteckigem Querschnitt ausgebildet. Die Aufnahmeöffnung dient zur Aufnahme eines Verbindungsarms eines Messerelements 4, welches mit dem Gabelelement 3 zu einer Grillzange zusammensteckbar ist. Das Messerelement kann gemäss einer der Fig. 2a bis 2c ausgebildet sein.

Fig. 1b zeigt eine Aufsicht auf das Gabelelement 3 gemäss Fig. 1a. Der zweite Gabelarm 32 ist gemäss dieser Darstellung vor dem ersten Gabelarm 31 angeordnet, sodass der erste Gabelarm 31 teilweise verdeckt ist. Die Breite des ersten und zweiten Gabelarms 31, 32 sind im Wesentlichen gleich. Vom zweiten Gabelarm ist nur der zweite Gabelarmabschnitt 37 sichtbar, der erste Gabelarmabschnitt 36 verläuft normal zur Zeichnungsebene. Der zweite Gabelarmabschnitt 37 weist eine geringere Länge in Parallelrichtung zum ersten Gabelarm 31 auf, damit der zweite Gabelarmabschnitt 37 bei bestimmungsgemässer Benutzung des Gabelelements 3 nicht in den Weg kommt, wenn beispielsweise Lebensmittel mit den Gabelspitzen 33 aufgespiesst werden sollen. Die Länge des ersten Gabelarmabschnitts 36 kann insbesondere im Wesentlichen der Breite B des Mantelelements mit der Mantelfläche 22 entsprechen, welche in Zusammenhang mit Fig. 3a bis 5c beschrieben werden wird.

Fig. 1c zeigt eine Seitenansicht auf das Gabelelement 3 gemäss Fig. 1a. Das Gabelelement 3 ist aus einem dünnwandigen Material hergestellt. Fig. 1c zeigt, dass die Wandstärke der ersten und zweiten Gabelarme 31, 32 wesentlich kleiner ist als deren Länge. Insbesondere kann das Gabelelement 3 aus einer Metallplatte, beispielsweise einem Blech gestanzt oder geschnitten sein.

Fig. 2a zeigt eine Ansicht eines Messerelements 4 für ein System zum Garen von Lebensmitteln gemäss einem ersten Ausführungsbeispiel. Das Messerelement 4 umfasst einen Messerarm 41 und einen Verbindungsarm 42. Der Messerarm 41 weist eine Seitenkante auf, die eine Schneide 43 enthält. Die Schneide 43 kann ein Zackenprofil aufweisen. Zwischen dem Messerarm 41 und dem Verbindungsarm 42 kann eine Einschnürung 48 vorgesehen sein, welche als Halterung für das Messerelement 4 dienen kann.

Fig. 2b zeigt eine Aufsicht auf das Messerelement 4 gemäss Fig. 2a, welche den Messerarm 41 sowie die Einschnürung 48 zum Verbindungsarm 42 zeigt.

Fig. 2c zeigt eine Seitenansicht auf das Messerelement 4 gemäss Fig. 2a. Die Wandstärke des Messerarms 41 sowie des Verbindungsarms 42 sind wesentlich kleiner ist als deren Länge. Insbesondere kann das das Messerelement 4 aus einer Metallplatte, beispielsweise einem Blech gestanzt oder geschnitten sein.

Fig. 3a zeigt eine Ansicht eines ersten Ausführungsbeispiels eines portablen Grillgeräts 10. Das portable Grillgerät 10 gemäss Fig. 3a umfasst ein erstes Gehäuseelement 1 und ein zweites Gehäuseelement 2 zur Aufnahme eines Brennstoffs. Das erste Gehäuseelement 1 ist in das zweite Gehäuseelement 2 einschiebbar.

Gemäss dem vorliegenden Ausführungsbeispiel weisen das erste Gehäuseelement 1 und das zweite Gehäuseelement 2 eine Grundfläche 11, 21 sowie eine Mantelfläche 12, 22 auf. Insbesondere kann die Mantelfläche einen rechteckförmigen Querschnitt aufweisen, wobei die Mantelfläche 12 des ersten Gehäuseelements 1 vier Seitenflächen 13, 14, 15, 16 aufweist. Die Mantelfläche 22 des zweiten Gehäuseelements 2 weist vier Seitenflächen 23, 24, 25, 26 auf. Die Seitenflächen 13, 14, 15, 16 erstrecken sich im Wesentlichen normal zur Grundfläche 11, sodass von der Grundfläche 11 und den vier Seitenflächen 13, 14, 15, 16 ein quaderförmiger Körper aufgespannt wird. Dieser quaderförmige Körper weist einen Hohlraum auf. Die Grundfläche 11 sowie die Seitenflächen 13, 14, 15, 16 können im Wesentlichen plattenförmig ausgebildet sein, wobei die Wandstärke der Grundfläche sowie der Seitenflächen wesentlich kleiner ist als deren Längen- oder Breitenabmessung. Insbesondere können die Grundfläche und die Seitenflächen blattförmig ausgebildet sein. Die Wandstärke des Blatts kann maximal 1 mm, vorzugsweise um die 0.5 mm betragen. Die Grundfläche sowie die Seitenflächen können insbesondere aus einem dünnwandigen Metallblatt gefertigt sein, beispielsweise einem Blechmaterial. Insbesondere können die Grundfläche und die Seitenflächen aus einem rostfreien Stahl hergestellt sein.

Eine der Seitenflächen, nämlich die Seitenfläche 13 des ersten Gehäuseelements 1, enthält eine Mehrzahl von Ausnehmungen 17. Eine der Seitenflächen, nämlich die Seitenfläche 23 des zweiten Gehäuseelements 2, enthält eine Mehrzahl von Ausnehmungen 27. Wenn das Gehäuseelement 1 in das Gehäuseelement 2 zumindest teilweise eingeschoben ist, überlappt die Seitenfläche 13 mit der Seitenfläche 23 zumindest teilweise. Die Ausnehmungen der Seitenfläche 13 können als Längsschlitze ausgebildet sein. Die Ausnehmungen der Seitenfläche 23 können als Längsschlitze ausgebildet sein. Insbesondere können die Ausnehmungen 17 der Seitenfläche 13 und die Ausnehmungen 27 der Seitenfläche 23 derart angeordnet sein, dass sie im geschlossenen Zustand nur teilweise oder nicht überlappen.

Wenn das Gehäuseelement 1 in das Gehäuseelement 2 eingeschoben ist, kann daher die verbleibende Querschnittsfläche der Ausnehmungen 17, 27 geringer sein als die Querschnittsfläche jeder der Ausnehmungen 17, 27 für sich. Nach einem Ausführungsbeispiel kann die verbleibende Querschnittsfläche der Ausnehmungen den Wert Null haben, wenn das erste Gehäuseelement 1 vollständig im zweiten Gehäuseelement 2 aufgenommen ist.

Die der Grundfläche 11 des ersten Gehäuseelements 1 gegenüberliegende Deckfläche kann offen sein. Die der Grundfläche 22 des zweiten Gehäuseelements 2 gegenüberliegende Deckfläche kann offen sein. Das erste Gehäuseelement 1 kann somit durch die als Öffnung ausgebildete Deckfläche mit einem Brennstoff befüllt werden. Dann kann das zweite Gehäuseelement 2 über das erste Gehäuseelement 1 gestülpt werden, sodass der Brennstoff im Innenraum des ersten Gehäuseelements 1 eingeschlossen ist. Daher muss für den Brennstoff kein zusätzlicher Platz eingeplant werden, der Brennstoff kann somit im Innenraum des ersten Gehäuseelements 1 Platz finden.

Insbesondere wenn die verbleibende Querschnittsfläche der Ausnehmungen 17, 27 im geschlossenen Zustand, das heisst, in dem Zustand in welchem das erste Gehäuseelement 1 in das zweite Gehäuseelement 2 eingeschoben ist, grösser als null ist, kann der Brennstoff in einem Beutel in das erste Gehäuseelement 1 eingebracht werden. Der Beutel kann aus brennbarem Material bestehen, der Beutel kann auch Anzündmittel enthalten, um den Brennstoff leichter zu entzünden. Insbesondere kann das brennbare Material rückstandsfrei verbrennen. Beispielsweise kann das brennbare Material Papier oder Karton enthalten.

Eine der Seitenflächen 14, 16 des ersten Gehäuseelements 1 kann eine Öffnung 28 enthalten, welche zur Zufuhr oder zur Entnahme eines Brennstoffs oder eines Brennstoffrückstands ausgebildet ist. Die Öffnung 28 kann verschliessbar sein.

Die Grundfläche 11 kann ein Ständerelement 19 enthalten. Das Ständerelement 19 dient dazu, das Grillgerät auf der Grundfläche 11 abzustellen. Das zweite Gehäuseelement 2 kann dabei, wie in Fig. 3b gezeigt ist, oberhalb des ersten Gehäuseelements 1 angeordnet sein. Das Grillgerät 10 kann insbesondere auf seine maximale Höhe ausgezogen sein. In dieser Position ist eine Luftzufuhr nicht nur über die Öffnung 28 oder über die Belüftungsöffnung 29 möglich, sondern auch durch die Ausnehmungen 17, 27. In dieser Position kann dem Brennstoff besonders viel Sauerstoff zugeführt werden, sodass der Brennstoff leicht entzündet werden kann und die Verbrennung schnell in Gang gebracht werden kann, sodass die notwendige Wärme schnell erreicht wird. Wenn die Sauerstoffzufuhr reduziert werden soll, kann das zweite Gehäuseelement 2 schrittweise oder kontinuierlich über das erste Gehäuseelement 1 geschoben werden. Hierdurch können die Öffnung 28 sowie die Belüftungsöffnung 29 geschlossen werden. Auch die Ausnehmungen 17, 27 werden je nach Ausführungsbeispiel teilweise oder sogar vollständig geschlossen.

Daher kann die Sauerstoffzufuhr gedrosselt werden, was dazu führt, dass die Geschwindigkeit des Verbrennungsvorgangs verringert werden kann und damit der Brennstoffverbrauch reduziert werden kann.

Die Mantelfläche 22 des zweiten Gehäuseelements 2 kann eine Höhe H, eine Breite B und eine Länge L aufweisen. Die Höhe H ist der Normalabstand zwischen Grundfläche und der Deckfläche, bzw. der an Stelle der Deckfläche vorhandenen Öffnung, die durch die Ränder der Mantelfläche 22 begrenzt ist. Die Höhe H beträgt maximal 150 mm, vorzugsweise maximal 120 mm. Die Länge L und die Breite B spannen die Querschnittsfläche der Grundfläche 21 auf. Gemäss diesem Ausführungsbeispiel ist die Querschnittsfläche rechteckförmig. Gemäss einem Ausführungsbeispiel beträgt die Länge L maximal 150 mm, vorzugsweise maximal 120 mm. Gemäss einem Ausführungsbeispiel beträgt die Breite B maximal 100 mm, vorzugsweise maximal 70 mm.

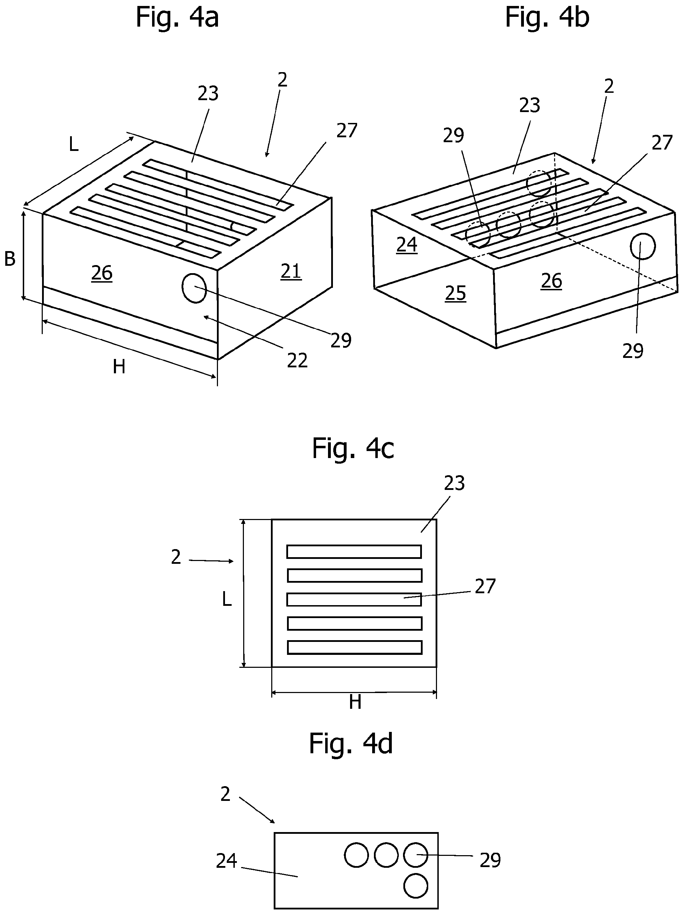

Fig. 4a zeigt eine Ansicht eines zweiten Gehäuseelements 2 gemäss einer der Fig. 3a-3c. Das zweite Gehäuseelement 2 besteht gemäss diesem Ausführungsbeispiel aus einer Grundfläche 21 und einer Mantelfläche 22. Die Mantelfläche 22 enthält vier Seitenflächen 23, 24, 25, 26, die jeweils paarweise parallel zueinander angeordnet sind. Die Mantelfläche 22 spannt somit gemäss diesem Ausführungsbeispiel eine rechteckige Querschnittsfläche auf. Die Seitenfläche 23 weist eine Mehrzahl von Ausnehmungen 27 auf, welche gemäss dem vorliegenden Ausführungsbeispiel als Längsschlitze ausgebildet sind. Die Ausnehmungen 27 erstrecken sich mindestens über die Hälfte der Höhe H. Die Ausnehmungen können auch einen nicht-rechteckigen Öffnungsquerschnitt aufweisen. Die Ausnehmungen können beispielsweise Stege enthalten. Alternativ können die Ausnehmungen auch als Löcher ausgebildet sein. Insbesondere kann der Öffnungsanteil der Ausnehmungen 27 in Richtung der Höhe H mindestens 50 % betragen, vorteilhafterweise mindestens 60% betragen.

Der Öffnungsanteil der Ausnehmungen in Richtung der Länge L kann mindestens 30% betragen. Insbesondere kann der Öffnungsanteil der Ausnehmungen in Richtung der Länge L mindestens 40% betragen.

Die an die Seitenfläche 23 angrenzenden Seitenflächen 24 und 26 können Belüftungsöffnungen 29 aufweisen. Gemäss Fig. 4a weist die Seitenfläche 26 eine Belüftungsöffnung 29 auf, die in der Nähe der Grundfläche 21 angeordnet ist.

Fig. 4b zeigt eine Ansicht des zweiten Gehäuseelements 2 gemäss Fig. 4a, welche die Deckfläche zeigt, die offen ist. Daher kann in Fig. 4b der Innenraum des zweiten Gehäuseelements 2 besser dargestellt werden. Die Seitenfläche 24, die teilweise sichtbar ist, enthält eine Mehrzahl von Belüftungsöffnungen 29. Die Belüftungsöffnungen 29 können auf unterschiedlichen Höhen der Seitenfläche 24 angeordnet sein. Die Belüftungsöffnungen 29 sind geschlossen, wenn sich im Innenraum des zweiten Gehäuseelements 2 das erste Gehäuseelement 1 befindet. Werden das zweite Gehäuseelement 2 und das erste Gehäuseelement 1 auseinandergezogen, können die Belüftungsöffnungen 29 je nach der Position des ersten Gehäuseelements 1 im zweiten Gehäuseelement 2 geöffnet oder geschlossen sein. Das heisst insbesondere, dass die Luftzufuhr zu einem im ersten und zweiten Gehäuseelement 1, 2 befindlichen Brennstoff stufenweise geregelt werden kann.

Fig. 4c zeigt eine Aufsicht des zweiten Gehäuseelements 2 gemäss Fig. 4a, welche die Seitenfläche 23 mit den Ausnehmungen 27 zeigt. Gemäss dem vorliegenden Ausführungsbeispiel sind fünf Ausnehmungen 27 parallel zueinander angeordnet. Jede der Ausnehmungen 27 weist dieselbe Querschnittsfläche auf. Die Querschnittsflächen der Ausnehmungen könnten sich auch voneinander unterscheiden, was zeichnerisch nicht dargestellt ist. Die Ausnehmungen 27 können insbesondere nicht symmetrisch in Bezug auf die parallel zur Höhe H verlaufende Mittenebene sein, welche die Halbierende der Länge L ausbildet. Die Ausnehmungen 27 können insbesondere derart angeordnet sein, dass sie nicht mit den Ausnehmungen 17 des ersten Gehäuseelements 1 überlappen, sodass die Seitenfläche 23 im zusammengeschobenen Zustand des ersten und zweiten Gehäuseelements 1, 2 für die Luftzufuhr geschlossen ist. Insbesondere kann auch ein im Gehäuseelement 1 befindlicher Brennstoff in dieser Konfiguration nicht aus dem Gehäuseelement 2 herausfallen, insbesondere wenn das erste Gehäuseelement 1 auf seiner Grundfläche 11 steht und die Deckfläche des zweiten Gehäuseelements 2 die Grundfläche 11 einschliesst oder unmittelbar angrenzend an die Grundfläche 11 angeordnet ist.

Fig. 4d zeigt eine Seitenansicht des zweiten Gehäuseelements gemäss Fig. 4a, in welcher die Seitenfläche 24 von aussen sichtbar ist. Die Seitenfläche 24 enthält gemäss diesem Ausführungsbeispiel vier Belüftungsöffnungen 29. Die Belüftungsöffnungen 29 befinden sich zumindest teilweise in der Nähe der Grundfläche 21, sodass die Belüftung im vollständig ausgezogenen Zustand im Vergleich mit der Belüftung im teilweise ausgezogenen Zustand verbessert ist.

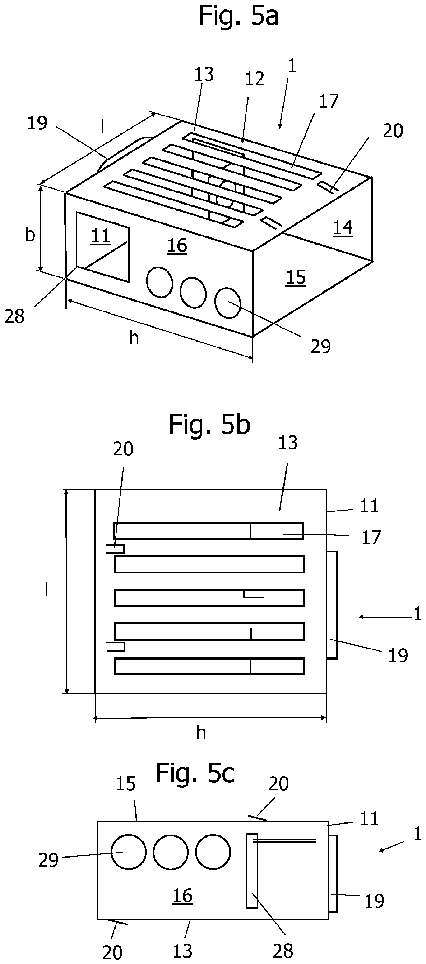

Fig. 5a zeigt eine Ansicht eines ersten Gehäuseelements 1 gemäss einer der Fig. 3a-3c. Das erste Gehäuseelement 1 besteht gemäss diesem Ausführungsbeispiel aus einer Grundfläche 11 und einer Mantelfläche 12. Die Mantelfläche 12 enthält vier Seitenflächen 13, 14, 15, 16, die jeweils paarweise parallel zueinander angeordnet sind. Die Mantelfläche 12 spannt somit gemäss diesem Ausführungsbeispiel eine rechteckige Querschnittsfläche auf. Die Seitenfläche 13 weist eine Mehrzahl von Ausnehmungen 17 auf, welche gemäss dem vorliegenden Ausführungsbeispiel als Längsschlitze ausgebildet sind. Die Ausnehmungen 17 erstrecken sich mindestens über die Hälfte der Höhe h. Die Ausnehmungen können auch einen nicht-rechteckigen Öffnungsquerschnitt aufweisen. Die Ausnehmungen können beispielsweise Stege enthalten. Alternativ können die Ausnehmungen auch als Löcher ausgebildet sein. Insbesondere kann der Öffnungsanteil der Ausnehmungen 17 in Richtung der Höhe h mindestens 50 % betragen, vorteilhafterweise mindestens 60% betragen.

Der Öffnungsanteil der Ausnehmungen 17 in Richtung der Länge l kann mindestens 30% betragen. Insbesondere kann der Öffnungsanteil der Ausnehmungen 17 in Richtung der Länge l mindestens 40% betragen.

Die an die Seitenfläche 13 angrenzenden Seitenflächen 14 oder 16 können Belüftungsöffnungen 29 aufweisen. Gemäss Fig. 5a weist die Seitenfläche 16 drei Belüftungsöffnungen 29 auf, die in der Nähe der Deckfläche angeordnet sind. Eine Öffnung 28 ist in der Nähe der Grundfläche 11 in der Seitenfläche 16 angeordnet. Diese Öffnung 28 kann verschliessbar sein, beispielsweise durch ein Türelement, was in Fig. 5c dargestellt ist. Auch die Seitenfläche 14 kann mindestens eine Öffnung 28 oder eine Belüftungsöffnung 29 enthalten, was in Fig. 5a nur angedeutet ist, da die Seitenfläche 14 grösstenteils durch die Seitenfläche 13 verdeckt ist. Die Belüftungsöffnungen können auf unterschiedlichen Höhen h der Seitenfläche 14 angeordnet sein. Die Belüftungsöffnungen 29 sind geschlossen, wenn sich das erste Gehäuseelement 1 im Innenraum des zweiten Gehäuseelements 2 befindet. Werden das zweite Gehäuseelement 2 und das erste Gehäuseelement auseinandergezogen, können die Belüftungsöffnungen 29 je nach der Position des ersten Gehäuseelements 1 im zweiten Gehäuseelement 2 geöffnet oder geschlossen sein. Das heisst insbesondere, dass die Luftzufuhr zu einem im ersten und zweiten Gehäuseelement 1, 2 befindlichen Brennstoffs stufenweise geregelt werden kann.

Die Seitenfläche 13 kann ein Fixierungselement 20 enthalten. Das Fixierungselement 20 kann als Lasche ausgebildet sein, welche von der Oberfläche der Seitenfläche 13 absteht. Die Lasche kann biegbar sein, sodass sie auf der Innenwand des zweiten Gehäuseelements 2 aufliegen kann, wenn das zweite Gehäuseelement 2 sich über dem ersten Gehäuseelement 1 befindet. Die Lasche kann insbesondere elastisch sein oder ein elastisches Material enthalten, sodass sie durch eine Ausnehmung 27 des zweiten Gehäuseelements hindurch ragen kann, um das zweite Gehäuseelement 2 derart am ersten Gehäuseelement 1 zu befestigen, dass ein versehentliches Trennen des ersten Gehäuseelements 1 vom zweiten Gehäuseelement 2 soweit erschwert ist, dass ein versehentliches Verschütten von insbesondere heissem Brennstoff verhindert werden kann, weil sich das erste und zweite Gehäuseelement 1, 2 durch das Fixierungselement ineinander verhaken oder zumindest derart fixiert werden, dass eine Trennung des ersten Gehäuseelements 1 vom zweiten Gehäuseelement 2 während eines Aufheizvorgangs oder eines Grillvorgangs nicht erfolgen kann.

Fig. 5a zeigt eine Ansicht des ersten Gehäuseelements 1, welche die Deckfläche zeigt, die offen ist. Daher kann in Fig. 5a der Innenraum des ersten Gehäuseelements 1 teilweise sichtbar sein. Die Seitenfläche 14, die teilweise sichtbar ist, enthält gemäss diesem Ausführungsbeispiel keine Belüftungsöffnung 29.

Fig. 5b zeigt eine Aufsicht des ersten Gehäuseelements 1 gemäss Fig. 5a, welche die Seitenfläche 13 mit den Ausnehmungen 17 zeigt. Gemäss dem vorliegenden Ausführungsbeispiel sind fünf Ausnehmungen 17 parallel zueinander angeordnet. Jede der Ausnehmungen 17 weist dieselbe Querschnittsfläche auf. Die Querschnittsflächen der Ausnehmungen könnten sich auch voneinander unterscheiden, was zeichnerisch nicht dargestellt ist. Die Ausnehmungen 17 können insbesondere nicht symmetrisch in Bezug auf die parallel zur Höhe h verlaufende Mittenebene sein, welche die Halbierende der Länge l ausbildet. Die Ausnehmungen 17 können insbesondere derart angeordnet sein, dass sie nicht mit den Ausnehmungen 27 des zweiten Gehäuseelements 2 überlappen, sodass die Seitenfläche 13 im zusammengeschobenen Zustand des ersten und zweiten Gehäuseelements 1, 2 für die Luftzufuhr geschlossen ist. Insbesondere kann auch ein im Gehäuseelement 1 befindlicher Brennstoff in dieser Konfiguration nicht aus dem Gehäuseelement 2 herausfallen, insbesondere wenn das erste Gehäuseelement 1 auf seiner Grundfläche 11 steht und die Deckfläche des zweiten Gehäuseelements 2 die Grundfläche 11 einschliesst oder unmittelbar angrenzend an die Grundfläche 11 angeordnet ist.

Zwei Fixierungselemente 20 sind versetzt zu den Ausnehmungen 17 auf der Seitenfläche 13 angeordnet.

Fig. 5c zeigt eine Seitenansicht des ersten Gehäuseelements 1 gemäss Fig. 5a, welche die Seitenfläche 16 zeigt. Die Seitenfläche 16 enthält gemäss dem vorliegenden Ausführungsbeispiel eine Mehrzahl von Belüftungsöffnungen 29, sowie eine Öffnung 28, welche in dieser Darstellung verschlossen ist. Die Seitenfläche 14 weist ein Fixierungselement 20 auf, welches als Lasche ausgebildet ist. Eine Mehrzahl von Fixierungselementen 20 kann wie in Fig. 5c vorgesehen sein, insbesondere können diese Fixierungselemente 20 hintereinander angeordnet sein. Gemäss diesem Ausführungsbeispiel weist auch die Seitenfläche 15 ein Fixierungselement 20 auf.

Die Grundfläche 11 enthält ein Ständerelement 19. Dieses Ständerelement kann insbesondere einen wärmebeständigen thermischen Isolator enthalten, um das portable Grillgerät auf einem beliebigen Untergrund abstellen zu können, ohne dass es zusätzlicher wärmedämmender Untersätze bedarf.

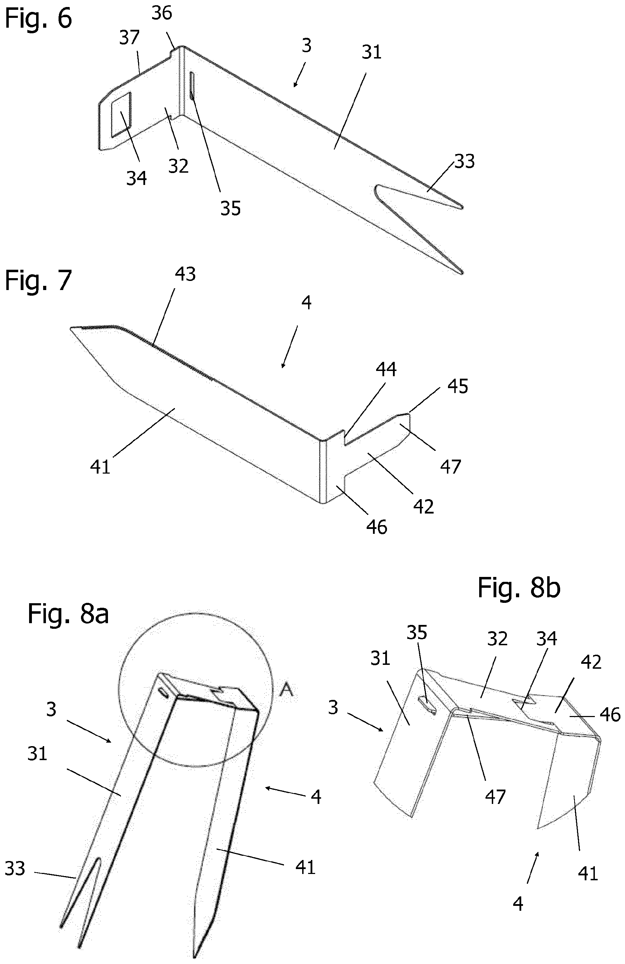

Fig. 6 zeigt eine Ansicht eines Gabelelements für ein System zum Garen von Lebensmitteln gemäss einem zweiten Ausführungsbeispiel. Gleiche Bauelemente oder Bauelemente gleicher Funktion tragen dieselben Bezugszeichen. In der nachfolgenden Beschreibung wird primär auf die Unterschiede zum ersten Ausführungsbeispiel eingegangen. Die in Zusammenhang mit dem ersten Ausführungsbeispiel gemachten Ausführungen gelten somit sinngemäss auch für das zweite Ausführungsbeispiel. Das Gabelelement 3 umfasst einen ersten Gabelarm 31, welcher eine Gabelspitze 33 enthält, sowie einen zweiten Gabelarm 32. Der zweite Gabelarm 32 weist gemäss diesem Ausführungsbeispiel einen Absatz auf, welcher den zweiten Gabelarm 32 in zwei Gabelarmabschnitte teilt. Der erste Gabelarmabschnitt 36 ist normal zum ersten Gabelarm 31 angeordnet. Der zweite Gabelarmabschnitt 37 ist normal zum ersten Gabelarm 31 angeordnet und schliesst an den ersten Gabelarmabschnitt 36 an. Der zweite Gabelarmabschnitt 37 enthält eine Aufnahmeausnehmung 34. Die Aufnahmeausnehmung 34 ist gemäss diesem Ausführungsbeispiel als eine Öffnung mit rechteckigem Querschnitt ausgebildet. Die Aufnahmeöffnung dient zur Aufnahme eines Verbindungsarms 42 eines Messerelements 4, welches mit dem Gabelelement 3 zu einer Grillzange zusammensteckbar ist was in Fig. 8a oder Fig. 8b gezeigt ist. Das Messerelement kann gemäss insbesondere gemäss Fig. 7 ausgebildet sein.

Fig. 7 zeigt eine Ansicht eines Messerelements 4 für ein System zum Garen von Lebensmitteln gemäss einem zweiten Ausführungsbeispiel. Das Messerelement 4 umfasst einen Messerarm 41 und einen Verbindungsarm 42. Der Messerarm 41 weist eine Seitenkante auf, die eine Schneide 43 enthält. Die Schneide 43 kann ein Zackenprofil aufweisen. Der Verbindungsarm 42 kann normal zum Messerarm 41 angeordnet sein. Der Verbindungsarm 42 umfasst einen ersten Verbindungsarmabschnitt 46 und einen zweiten Verbindungsarmabschnitt 47. Ein Absatz bildet den Übergang vom ersten Verbindungsarmabschnitt 46 zum zweiten Verbindungsarmabschnitt 47 aus. Die Länge des Verbindungsarms 42 ist gemäss diesem Ausführungsbeispiel kleiner als die Länge des Messerarms 41. Die Breite des ersten Verbindungsarmabschnitts 46 kann gleich sein wie die Breite des Messerarms 41. Die Breite des zweiten Verbindungsarmabschnitts 47 ist gemäss diesem Ausführungsbeispiel kleiner als die Breite des Messerarms 41 oder des ersten Verbindungarmabschnitts 46. Die Breite des zweiten Verbindungsarmabschnitts 47 kann in Richtung des freien Endes des Verbindungsarms 42 abnehmen.

Fig. 8a zeigt eine Ansicht einer Grillzange für ein System zum Garen von Lebensmitteln gemäss dem zweiten Ausführungsbeispiel. Die Grillzange wird durch Zusammenstecken des Gabelelements 3 und des Messerelements 4 erhalten. Insbesondere werden der zweite Gabelarm 31 und der Verbindungsarm 42 miteinander verbunden. Hierzu wird der zweite Verbindungsarmabschnitt 47 in die Aufnahmeausnehmung 34 des zweiten Gabelarms 32 eingeführt und durch die Aufnahmeausnehmung 34 hindurchgeschoben, bis das freie Ende des Verbindungsarms 42 in Kontakt mit dem ersten Gabelarm 31 kommt. Das freie Ende des Verbindungsarms 42 wird in den Befestigungsschlitz 35 des ersten Gabelarms 32 eingesteckt. Die Breite der Aufnahmeausnehmung 34 ist vorteilhafterweise im Wesentlichen gleich der Breite des zweiten Verbindungsarmabschnitts 47.

Fig. 8b zeigt ein Detail der Grillzange gemäss Fig. 8a, gemäss welchem der Verbindungsarm 42 des Messerelements 4 mit dem zweiten Gabelarm 32 des Gabelelements 3 verbunden ist. Das Ende des zweiten Verbindungsarmabschnitts 47 ist im Befestigungsschlitz 35 aufgenommen. Der zweite Verbindungsarmabschnitt 47 ist durch die Aufnahmeausnehmung 34 des zweiten Gabelarms 32 hindurchgesteckt. Der erste Gabelarm 31 und der Messerarm 41 können mit einer Hand gehalten werden und können durch eine Druckbewegung derart aufeinander zu bewegt werden, dass sich der Abstand zwischen der Gabelspitze 33 und dem Messerarm, insbesondere dessen Spitze soweit verringert, dass ein Grillgut zwischen der Gabelspitze 33 und dem Messerarm eingeklemmt werden kann. Vorteilhafterweise weist das Material des Messerelements 4 und des Gabelelements 3 genügend Elastizität auf, um eine derartige Auslenkung zuzulassen. Insbesondere soll nach Wegfall der Druckkraft das Messerelement 4 und das Gabelelement 3 selbsttätig in seine ursprüngliche Lage zurückkehren, wie sie in Fig. 8a oder Fig. 8b gezeigt ist.

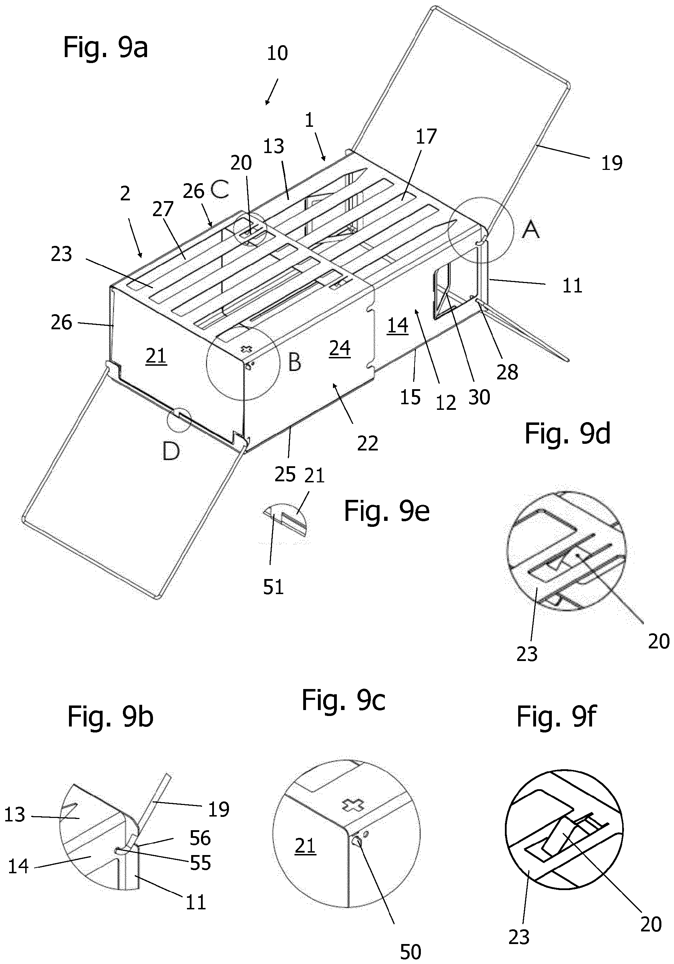

Fig. 9a zeigt eine Ansicht eines zweiten Ausführungsbeispiels eines portablen Grillgeräts. Das portable Grillgerät 10 gemäss Fig. 9a umfasst ein erstes Gehäuseelement 1 und ein zweites Gehäuseelement 2 zur Aufnahme eines Brennstoffs. Das erste Gehäuseelement 1 ist in das zweite Gehäuseelement 2 einschiebbar. Gemäss dem vorliegenden Ausführungsbeispiel weisen das erste Gehäuseelement 1 und das zweite Gehäuseelement 2 eine Grundfläche 11, 21 sowie eine Mantelfläche 12, 22 auf. Insbesondere kann die Mantelfläche einen rechteckförmigen Querschnitt aufweisen, wobei die Mantelfläche 12 des ersten Gehäuseelements 1 vier Seitenflächen 13, 14, 15, 16 aufweist. Die Mantelfläche 22 des zweiten Gehäuseelements 2 weist vier Seitenflächen 23, 24, 25, 26 auf. Die Seitenflächen 13, 14, 15, 16 erstrecken sich im Wesentlichen normal zur Grundfläche 11, sodass von der Grundfläche 11 und den vier Seitenflächen 13, 14, 15, 16 ein quaderförmiger Körper aufgespannt wird. Dieser quaderförmige Körper weist einen Hohlraum auf. Die Grundfläche 11 sowie die Seitenflächen 13, 14, 15, 16 können im Wesentlichen plattenförmig ausgebildet sein, wobei die Wandstärke der Grundfläche sowie der Seitenflächen wesentlich kleiner ist als deren Längen- oder Breitenabmessung. Insbesondere können die Grundfläche und die Seitenflächen blattförmig der plattenförmig ausgebildet sein. Die Wandstärke des Blatts kann maximal 1 mm, vorzugsweise um die 0.5 mm betragen. Die Grundfläche sowie die Seitenflächen können insbesondere aus einem dünnwandigen Metallblatt gefertigt sein, beispielsweise einem Blechmaterial. Insbesondere können die Grundfläche und die Seitenflächen aus einem rostfreien Stahl hergestellt sein. Gemäss diesem Ausführungsbeispiel kann Grundfläche 11 sowie die Grundfläche 21 von der Mantelfläche 22 abnehmbar sein. Die Grundflächen 11, 21 können als Plattenelemente ausgebildet sein. Die Grundfläche 21 kann ein Einrastelement 51, beispielsweise eine Einrastlasche oder ein Eingriffselement 50 enthalten, was in Fig. 9c bzw. Fig. 9e im Detail dargestellt ist.

Eine der Seitenflächen, nämlich die Seitenfläche 13 des ersten Gehäuseelements 1, enthält eine Mehrzahl von Ausnehmungen 17. Eine der Seitenflächen, nämlich die Seitenfläche 23 des zweiten Gehäuseelements 2 enthält eine Mehrzahl von Ausnehmungen 27. Wenn das Gehäuseelement 1 in das Gehäuseelement 2 zumindest teilweise eingeschoben ist, überlappt die Seitenfläche 13 mit der Seitenfläche 23 zumindest teilweise. Die Ausnehmungen der Seitenfläche 13 können als Längsschlitze ausgebildet sein. Die Ausnehmungen der Seitenfläche 23 können als Längsschlitze ausgebildet sein. Insbesondere können die Ausnehmungen 17 der Seitenfläche 13 und die Ausnehmungen 27 der Seitenfläche 23 derart angeordnet sein, dass sie im geschlossenen Zustand nur teilweise oder nicht überlappen. Wenn das Gehäuseelement 1 in das Gehäuseelement 2 eingeschoben ist, kann daher die verbleibende Querschnittsfläche der Ausnehmungen 17, 27 geringer sein als die Querschnittsfläche jeder der Ausnehmungen 17, 27 für sich. Nach einem Ausführungsbeispiel kann die verbleibende Querschnittsfläche der Ausnehmungen den Wert Null haben, wenn das erste Gehäuseelement 1 vollständig im zweiten Gehäuseelement 2 aufgenommen ist.

Die der Grundfläche 11 des ersten Gehäuseelements 1 gegenüberliegende Deckfläche kann offen sein. Die der Grundfläche 22 des zweiten Gehäuseelements 2 gegenüberliegende Deckfläche kann offen sein. Das erste Gehäuseelement 1 kann somit durch die als Öffnung ausgebildete Deckfläche mit einem Brennstoff befüllt werden. Dann kann das zweite Gehäuseelement 2 über das erste Gehäuseelement 1 gestülpt werden, sodass der Brennstoff im Innenraum des ersten Gehäuseelements 1 eingeschlossen ist. Daher muss für den Brennstoff kein zusätzlicher Platz eingeplant werden, der Brennstoff kann somit im Innenraum des ersten Gehäuseelements 1 Platz finden.

Insbesondere, wenn die verbleibende Querschnittsfläche der Ausnehmungen 17, 27 im geschlossenen Zustand, das heisst, in dem Zustand in welchem das erste Gehäuseelement 1 in das zweite Gehäuseelement 2 eingeschoben ist, grösser als null ist, kann der Brennstoff in einem Beutel 6 in das erste Gehäuseelement 1 eingebracht werden. Der Beutel kann aus brennbarem Material bestehen, der Beutel kann auch Anzündmittel enthalten, um den Brennstoff leichter zu entzünden. Insbesondere kann das brennbare Material rückstandsfrei verbrennen. Beispielsweise kann das brennbare Material Papier oder Karton enthalten.

Eine der Seitenflächen 14, 16 des ersten Gehäuseelements 1 kann eine Öffnung 28 enthalten, welche zur Zufuhr oder zur Entnahme eines Brennstoffs oder eines Brennstoffrückstands ausgebildet ist. Die Öffnung 28 kann verschliessbar sein. Fig. 9a zeigt eine Türe, welche in den Innenraum des ersten Gehäuseelements 1 öffnet.

Die Grundfläche 11 oder die Mantelfläche 12, 22 oder die Grundfläche 21 können ein Ständerelement 19 enthalten. Das Ständerelement 19 dient dazu, das Grillgerät auf der Grundfläche 11 bzw. der Seitenflächen 15, 25 abzustellen. Gemäss dem vorliegenden Ausführungsbeispiel ist das Ständerelement 19 als Bügelelement ausgebildet. Insbesondere können eine Mehrzahl von Bügelelementen vorgesehen sein, gemäss dem vorliegenden Ausführungsbeispiel zwei Bügelelemente. Jedes der Bügelelemente kann abnehmbar sein, insbesondere können die Bügelelemente je nach gewünschter Position des Grillgeräts entsprechend positioniert werden. In Fig. 9a sind zwei mögliche Positionen gezeigt. Gemäss einer der Positionen wird das portable Grillgerät 10 derart auf einer Unterlage abgestellt, dass die Grundfläche 11 die zuunterst gelegene Fläche des portablen Grillgeräts 10 ausbildet. Gemäss einer weiteren Position wird das portable Grillgerät 10 derart auf einer Unterlage abgestellt, dass die Seitenflächen 15, 25 die zuunterst gelegene Flächen des portablen Grillgeräts 10 ausbilden. Durch die Ständerelemente 19 ist gewährleistet, dass das erste und zweite Gehäuseelement 1, 2 in einem Abstand zur Unterlage angeordnet ist. Hierdurch kann vermieden werden, dass die Unterlage wesentlich erwärmt wird. Das Ständerelement 19 nach einem Ausführungsbeispiel weist ein Grundelement auf, welches zur Auflage auf einer Unterlage bestimmt ist und ein erstes und zweites Armelement, welches das Grundelement mit einem der ersten oder zweiten Gehäuseelemente 1, 2 verbinden. Das erste und zweite Armelement können elastisch sein, sodass das erste und zweite Armelement durch Ausübung einer Zugkraft auf das erste und zweite Armelement aus der Nut 56, die in Fig. 9b im Detail dargestellt ist, herausgeführt werden kann und somit um die als Drehpunkt wirkende Ausnehmung 55 drehbar ist. Durch Ausübung der Zugkraft werden das erste und zweite Armelement auseinandergezogen, das heisst aufgeweitet. Die Aufweitung ist im Bereich der Endabschnitte des ersten und zweiten Armelements maximal. Die Endabschnitte des ersten und zweiten Armelements können Fingerelemente ausbilden, welche in der entsprechenden Ausnehmung 55 verschiebbar aufgenommen sind. Die Länge jedes der Fingerelemente kann länger sein als die Tiefe der Nut 56, sodass das Ständerelement 19 oder jedes der Ständerelemente 19 in der Ausnehmung drehbar ist. Das Ständerelement 19 kann in dieser Stellung über das erste und zweite Gehäuseelement 1, 2 geschoben werden, sodass das erste und zweite Gehäuseelement 1, 2 durch das Ständerelement 19 oder die Ständerelemente 19 in der eingezogenen Position gehalten werden. Hierdurch kann das portable Grillgerät eine sehr kompakte Bauweise erhalten. Die ersten und zweiten Armelemente des oder der Ständerelemente 19 können eine Länge aufweisen, die grösser ist als die Höhe H des zweiten Gehäuseelements 2 und die Höhe h des ersten Gehäuseelements 1. Die Ständerelemente 19 können in der eingezogenen Position das erste und zweite Gehäuseelement umgreifen. Insbesondere kann hierdurch vermieden werden, dass sich das erste und zweite Gehäuseelement 1, 2 beim Transport selbsttätig in eine ausgezogene Position bewegen. Daher muss keine zusätzliche Halterung oder Transportsicherung vorgesehen sein. Die Ständerelemente 19 können selbst als eine Transportsicherung dienen.

Das zweite Gehäuseelement 2 kann dabei, wie für das Ausführungsbeispiel gemäss Fig. 3b gezeigt ist, auch gemäss diesem Ausführungsbeispiel oberhalb des ersten Gehäuseelements 1 angeordnet sein. Das Grillgerät 10 kann insbesondere auf seine maximale Höhe ausgezogen sein. In dieser Position ist eine Luftzufuhr nicht nur über die Öffnung 28, sondern auch durch die Ausnehmungen 17, 27 ermöglicht. In dieser Position kann dem Brennstoff besonders viel Sauerstoff zugeführt werden, sodass der Brennstoff leicht entzündet werden kann und die Verbrennung schnell in Gang gebracht werden kann, sodass die notwendige Wärme schnell erreicht wird. Wenn die Sauerstoffzufuhr reduziert werden soll, kann das zweite Gehäuseelement 2 schrittweise oder kontinuierlich über das erste Gehäuseelement 1 geschoben werden. Hierdurch können die Ausnehmungen 17, 27 je nach Ausführungsbeispiel teilweise oder sogar vollständig geschlossen werden. Daher kann die Sauerstoffzufuhr gedrosselt werden, was dazu führt, dass die Geschwindigkeit des Verbrennungsvorgangs verringert werden kann und damit der Brennstoffverbrauch reduziert werden kann. Hierdurch kann gegebenenfalls eine Glut erzeugt werden.

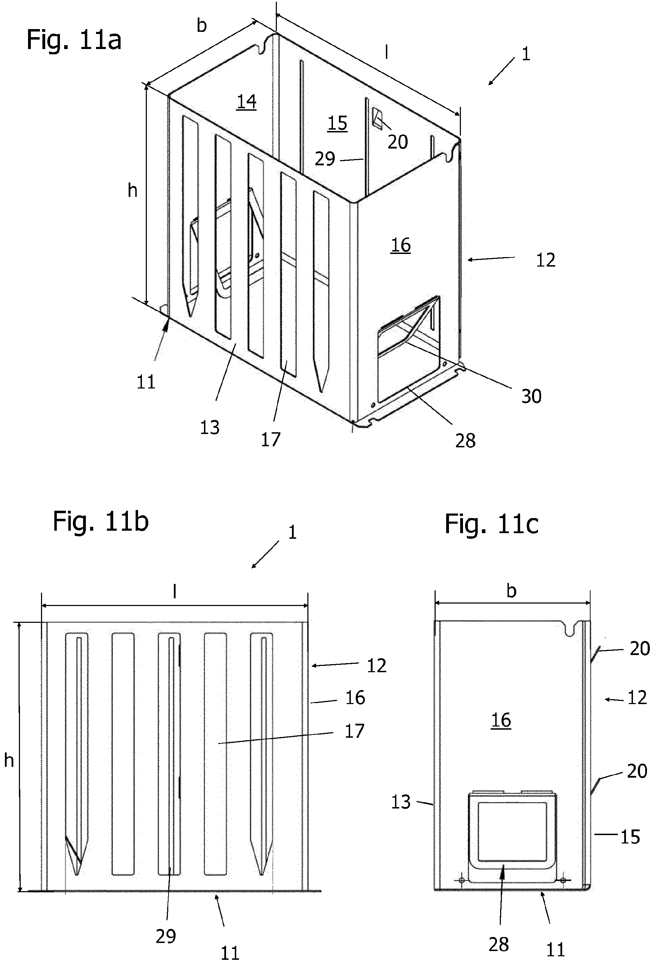

Die Öffnung 28 kann eine Halterung 30 enthalten, die beispielsweise in Fig. 11a im Detail dargestellt ist. Die Halterung 30 dient der Aufnahme des Brennstoffs und stellt sicher, dass im stehenden Zustand des portablen Grillgeräts 10 der Brennstoff nicht oder nicht vollständig auf der Grundfläche 11 aufliegt. Die Halterung 30 kann eine Öffnung enthalten, durch welche ein Anzündmittel in das erste Gehäuseelement 1 eingebracht werden kann.

Wenn sich das erste Gehäuseelement 1 und das zweite Gehäuseelement 2 wie in Fig. 9a gezeigt ist, im ausgezogenen Zustand befindet, kann die Seitenfläche 13, 23 ihre maximale Ausdehnung aufweisen. Die Seitenfläche 13, 23 ist zur Auflage eines Grillguts bestimmt. Da die Seitenflächen 13, 23 im ausgezogenen Zustand im Vergleich zum eingezogenen Zustand eine fast doppelt so grosse Querschnittsfläche aufweisen, wird die Auflagefläche für das Grillgut fast verdoppelt. Der Brennstoff kann im gesamten Innenraum des ersten und zweiten Gehäuseelements verteilt werden, sodass eine gleichmässige Wärmeübertragung auf das Grillgut im Wesentlichen über die gesamte Seitenfläche 13, 23 erfolgen kann. Ein Fixierungselement 20 kann vorgesehen sein, um das erste Gehäuseelement 1 auch oder gerade im ausgezogenen Zustand verliersicher im zweiten Gehäuseelement 2 zu halten, insbesondere wenn zusätzliches Gewicht durch das aufgelegte Grillgut auf die Seitenflächen 13, 23 sowie auf die Bügelelemente wirkt.

Fig. 9b zeigt ein Detail des portablen Grillgeräts gemäss Fig. 9a, welches die Aufnahme des Ständerelements 19 im ersten Gehäuseelement 1 zeigt. Das in Fig. 9b dargestellte Detail wird in Fig. 9a mit dem Buchstaben A gekennzeichnet. Das Ständerelement 19 ist als Bügelelement ausgebildet. Das Bügelelement kann insbesondere als Stangenelement, Rohrelement oder drahtartiges Element ausgebildet sein. Das Ende des Bügelelements kann in einer Ausnehmung 55 der Seitenfläche abnehmbar aufgenommen oder permanent verankert sein. Das Bügelelement kann um einen Drehpunkt, der im Bereich der Ausnehmung 55 liegt, drehbar sein. Das Bügelelement kann durch eine Nut 56 der Grundfläche 11 geführt werden. Die Nut 56 kann den Anstellwinkel des Bügelelements in Bezug auf die Grundfläche 11 festlegen.

Fig. 9c zeigt ein Detail des portablen Grillgeräts gemäss Fig. 9a. Dieses Detail ist in Fig. 9a mit dem Buchstaben B gekennzeichnet. Fig. 9c zeigt ein Eingriffselement 50, welches mit der Grundfläche 21 verbunden ist. Das Eingriffselement 50 ist in einer Öffnung der Seitenfläche 24 aufgenommen. Ein gleichartiges Eingriffselement 50 kann auf der gegenüberliegenden Seite vorhanden sein, welches in einer Öffnung der Seitenfläche 26 aufgenommen ist, was in der Ansicht der Fig. 9a nicht sichtbar ist. Die Grundfläche 21 kann somit drehbar in Bezug auf die Mantelfläche 22 sein. Der Drehpunkt wird durch das Eingriffselement 50 gebildet. Die Grundfläche 21 kann somit als Deckelelement ausgebildet sein, welches geöffnet werden kann um Brennstoff in den Innenraum des ersten und zweiten Gehäuseelements 1, 2 einzufüllen oder Brennstoffreste aus dem Innenraum zu entfernen. Gemäss diesem Ausführungsbeispiel ist es nicht erforderlich, das erste und zweite Gehäuseelement 1, 2 voneinander zu trennen. Das erste und zweite Gehäuseelement 1, 2 werden relativ zueinander verschoben, beispielsweise, indem das Gabelelement 3 und das Messerelement 4 in je eine der Ausnehmungen 17 bzw. 27 oder einer zusätzlichen, nicht dargestellten Ausnehmung auf der Seitenfläche 13 oder der Seitenfläche 23, die für diesen Zweck vorgesehen werden kann, eingeführt wird. Mit dem Messerelement 4 und dem Gabelelement 3 können die ersten und zweiten Gehäuseelemente 1, 2 auch im heissen Zustand relativ zueinander verschoben werden, d.h. ausgezogen oder ineinander eingeschoben werden ohne dass der Benutzer die heissen Oberflächen der Mantelflächen 12, 22 berühren müsste.

Die Grundfläche 21 kann somit als Deckelelement geöffnet werden, um Brennstoff einzufüllen. Die Grundfläche 21 kann auch durch ein Arretierelement in der geöffneten Stellung verbleiben, zumindest bis der Befüllvorgang abgeschlossen ist. Die Grundfläche 21 kann in der stehenden Position des portablen Grillgeräts auch noch während des Heizvorgangs im offenen Zustand verbleiben, um den Luftzug zu erhöhen. Das Arretierelement kann beispielsweise als ein Schlitz für das Eingriffselement 50 ausgebildet sein, der in der Seitenfläche 24 bzw. in der gegenüberliegenden Seitenfläche 26 ausgebildet ist. Der Schlitz ist zeichnerisch in Fig. 9c nicht dargestellt. Alternativ kann das Arretierelement auch eine Nut oder Ausnehmung umfassen.

Fig. 9d zeigt ein Detail des portablen Grillgeräts gemäss Fig. 9a, welches das Fixierungselement 20 oder eines der Fixierungselemente 20 zeigt. Das Detail gemäss Fig. 9e ist in Fig. 9a mit C bezeichnet.

Fig. 9e zeigt ein Detail des portablen Grillgeräts gemäss Fig. 9a, welches das Einrastelement 51 zeigt, welches mit der Grundfläche 21 verbunden ist. Das Detail gemäss Fig. 9e ist in Fig. 9a mit D bezeichnet. Das Einrastelement 51 kann mit der Seitenfläche 25 verbunden werden, um die Grundfläche 21 mit der Mantelfläche 22 zu verbinden. Für die Verbindung der Grundfläche 11 mit dem Mantelelement 12 des ersten Gehäuseelements kann ebenfalls ein Einrastelement oder ein Eingriffselement vorgesehen sein, welches insbesondere gleich wie das Einrastelement 51 oder das Eingriffselement 50 ausgebildet sein kann.

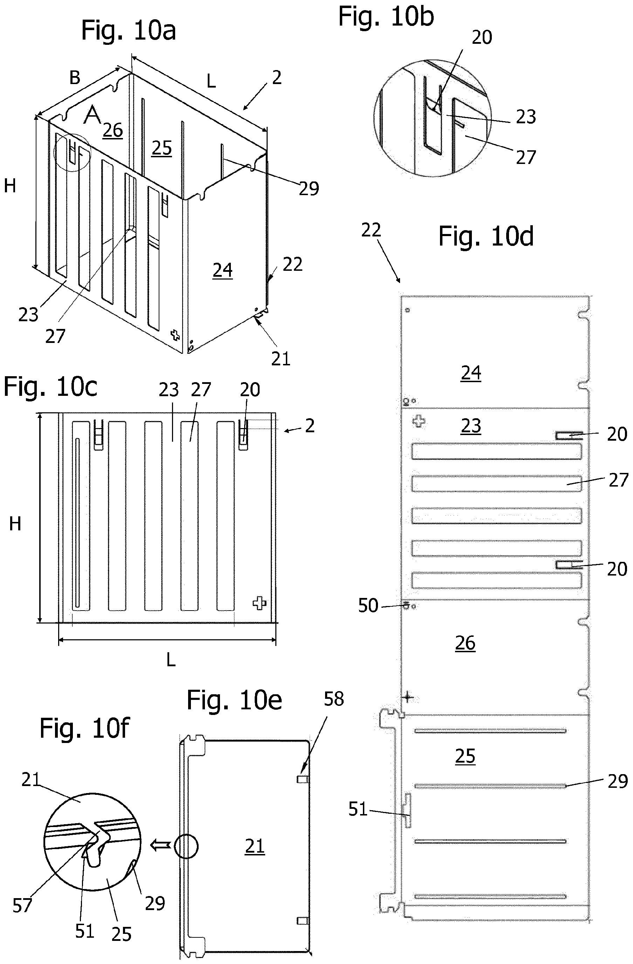

Fig. 9f zeigt ein Detail einer Variante des portablen Grillgeräts gemäss Fig. 9a, welches anstelle des Fixierungselements 20 oder in Ergänzung zum Fixierungselement 20 gemäss Fig. 9d oder 10b verwendet werden kann. Das Fixierungselement 20 gemäss Fig. 9f ist ebenfalls als eine Lasche ausgebildet. Ein erstes Ende des Fixierungselements ist mit der Seitenfläche 23 verbunden, wie es auch in Fig. 9d gezeigt ist. Ein zweites Ende des Fixierungselements ist als freies Ende ausgebildet. Das Fixierungselement 20 weist eine erste Krümmung auf, welche in Richtung des Innenraums des zweiten Gehäuseelements 2 gerichtet ist sowie eine zweite Krümmung, welche in Richtung der Aussenseite des Gehäuseelements 2 ausgerichtet ist. Das Fixierungselement kann angenähert eine s-förmige Form aufweisen. Der Bogen der zweiten Krümmung kann über die Oberfläche der Seitenfläche 23 hinausragen. Gemäss diesem Ausführungsbeispiel ist das Fixierungselement 20 von aussen zugänglich und daher manipulierbar. Mit der Hand oder einem der Messer- oder Gabelelemente kann das Fixierungselement angehoben werden, um die Fixierung zu lösen, oder in den Innenraum hineingedrückt werden, um die Fixierung zu arretieren.

Der Bogen der ersten Krümmung des s-förmigen Fixierungselements 20 kann in den Innenraum des zweiten Gehäuseelements 2 hineinragen. Der Bogen der ersten Krümmung kann als Auflage für den Rand der Mantelfläche 12 des ersten Gehäuseelements 1 dienen, wenn sich das Gehäuseelement 1 und das Gehäuseelement 2 in der ausgezogenen Position befinden. Mit anderen Worten kann durch das Fixierungselement 20 sichergestellt werden, dass das portable Grillgerät 10 auch in der ausgezogenen Position verbleibt, wenn es zu Beginn des Heizvorgangs aufgestellt ist, um die Sauerstoffzufuhr zu optimieren, bis es zur Entstehung einer Glut kommt.

Fig. 10a zeigt eine Ansicht eines zweiten Gehäuseelements 2 gemäss einer der Fig. 9a-9e. Das zweite Gehäuseelement 2 besteht gemäss diesem Ausführungsbeispiel aus einer Grundfläche 21 und einer Mantelfläche 22. Die Mantelfläche 22 enthält vier Seitenflächen 23, 24, 25, 26, die jeweils paarweise parallel zueinander angeordnet sind. Die Mantelfläche 22 spannt somit gemäss diesem Ausführungsbeispiel eine rechteckige Querschnittsfläche auf. Die Mantelfläche 22 des zweiten Gehäuseelements 2 kann eine Höhe H, eine Breite B und eine Länge L aufweisen. Die Höhe H ist der Normalabstand zwischen Grundfläche und der Deckfläche, bzw. der an Stelle der Deckfläche vorhandenen Öffnung, die durch die Ränder der Mantelfläche 22 begrenzt ist. Die Höhe H beträgt maximal 150 mm, vorzugsweise maximal 120 mm. Die Länge L und die Breite B spannen die Querschnittsfläche der Grundfläche 21 auf. Gemäss diesem Ausführungsbeispiel ist die Querschnittsfläche rechteckförmig. Gemäss einem Ausführungsbeispiel beträgt die Länge L maximal 150 mm, vorzugsweise maximal 120 mm. Gemäss einem Ausführungsbeispiel beträgt die Breite B maximal 100 mm, vorzugsweise maximal 70 mm.

Die Seitenfläche 23 weist eine Mehrzahl von Ausnehmungen 27 auf, welche gemäss dem vorliegenden Ausführungsbeispiel als Längsschlitze ausgebildet sind. Die Ausnehmungen 27 erstrecken sich mindestens über die Hälfte der Höhe H. Die Ausnehmungen können auch einen nicht-rechteckigen Öffnungsquerschnitt aufweisen. Die Ausnehmungen können beispielsweise Stege enthalten. Alternativ können die Ausnehmungen auch als Löcher ausgebildet sein. Insbesondere kann der Öffnungsanteil der Ausnehmungen 27 in Richtung der Höhe H mindestens 50 % betragen, vorteilhafterweise mindestens 60% betragen. Der Öffnungsanteil der Ausnehmungen in Richtung der Länge L kann mindestens 30% betragen. Insbesondere kann der Öffnungsanteil der Ausnehmungen in Richtung der Länge L mindestens 40% betragen.

Die an die Seitenfläche 23 angrenzenden Seitenflächen 24 und 26 weisen gemäss diesem Ausführungsbeispiel keine Belüftungsöffnungen auf. Belüftungsöffnungen 29 sind gemäss diesem Ausführungsbeispiel in der Seitenfläche 25 vorgesehen. Die Belüftungsöffnungen 29 gemäss diesem Ausführungsbeispiel sind als Längsschlitze ausgebildet. Die Belüftungsöffnungen 29 können sich insbesondere entlang mindestens einer Länge erstrecken, die der Hälfte der Höhe H des zweiten Gehäuseelements 2 entspricht.

Fig. 10b zeigt ein Detail des zweiten Gehäuseelements 2 gemäss einer der Fig. 9a-9e bzw. gemäss Fig. 10a. Das Detail gemäss Fig. 10b ist in Fig. 10a mit A bezeichnet. Wie Fig. 9d zeigt das Detail eines der Fixierungselemente 20. Das Fixierungselement 20 ist als eine Lasche ausgebildet, welche mit der Seitenfläche 23 über eine Seite verbunden ist. Die Lasche ist in einem spitzen Winkel zur Oberfläche der Seitenfläche 23 angeordnet. Die Lasche erstreckt sich im gebogenen Zustand in den Innenraum des Mantelelements, welches durch die Mantelfläche 22 aufgespannt ist.

Fig. 10c zeigt eine Aufsicht des zweiten Gehäuseelements 2 gemäss einer der Fig. 9a-9e oder gemäss Fig. 10a, welche die Seitenfläche 23 mit den Ausnehmungen 27 zeigt. Gemäss dem vorliegenden Ausführungsbeispiel sind fünf Ausnehmungen 27 parallel zueinander angeordnet. Jede der Ausnehmungen 27 weist dieselbe Querschnittsfläche auf. Die Querschnittsflächen der Ausnehmungen könnten sich auch voneinander unterscheiden, was zeichnerisch nicht dargestellt ist. Die Ausnehmungen 27 können insbesondere nicht symmetrisch in Bezug auf die parallel zur Höhe H verlaufende Mittenebene sein, welche die Halbierende der Länge L ausbildet. Die Ausnehmungen 27 können insbesondere derart angeordnet sein, dass sie nicht mit den Ausnehmungen 17 des ersten Gehäuseelements 1 überlappen, sodass die Seitenfläche 23 im zusammengeschobenen Zustand des ersten und zweiten Gehäuseelements 1, 2 für die Luftzufuhr geschlossen ist. Insbesondere kann auch ein im Gehäuseelement 1 befindlicher Brennstoff in dieser Konfiguration nicht aus dem Gehäuseelement 2 herausfallen, insbesondere wenn das erste Gehäuseelement 1 auf seiner Grundfläche 11 steht und die Deckfläche des zweiten Gehäuseelements 2 die Grundfläche 11 einschliesst oder unmittelbar angrenzend an die Grundfläche 11 angeordnet ist.

Die Fixierungselemente 20 sind gemäss diesem Ausführungsbeispiel auf der Seitenfläche 23 angeordnet und nicht wie im vorhergehenden Ausführungsbeispiel auf der Seitenfläche 13 des ersten Gehäuseelements 1.

Fig. 10d eine Abwicklung des zweiten Gehäuseelements 2 gemäss einer der Fig. 9a-9e sowie gemäss Fig. 10a. Das Gehäuseelement 2 besteht gemäss diesem Ausführungsbeispiel aus zwei Teilen, nämlich der Mantelfläche 22, die aus einem Bandmaterial hergestellt sein kann und der Grundfläche 21, welche ebenfalls aus einem Bandmaterial hergestellt sein kann. Das Bandmaterial kann insbesondere ein Blech umfassen. Das Blech kann auf die gewünschte Länge zugeschnitten werden. Die Ausnehmungen 27, die Belüftungsöffnungen 29, die Eingriffselemente 50, ein Einrastelement 51 können aus dem Blech ausgeschnitten oder gestanzt werden. Beispielsweise kann ein Laserschneidverfahren zum Einsatz kommen.

Fig. 10e zeigt eine Ansicht auf die Grundfläche 21 des zweiten Gehäuseelements gemäss einer der Fig. 9a-9e, sowie Fig. 10a. Die Grundfläche 21 ist zumindest über das Einrastelement 51 sowie das Eingriffselement 50 oder die Eingriffselemente 50 mit der Mantelfläche 22 verbindbar. Die Grundfläche 21 kann von der Mantelfläche 22 jederzeit getrennt werden, indem das Einrastelement 51 wird und die Grundfläche 21 derart aufgeklappt wird, dass ein Zugang zum Innenraum des zweiten Gehäuseelements 2 erhalten wird. Da die Grundfläche 21 abnehmbar ist, muss das erste und das zweite Gehäuseelement nicht mehr vollständig auseinandergenommen werden, um den Brennstoff aus dem portablen Grillgerät zu entfernen oder das portable Grillgerät 10 wieder mit Brennstoff zu befüllen. Die Hakenelemente 58 können eine Befestigung der Grundfläche auf der der Seitenfläche 25 gegenüberliegenden Seitenfläche 23 ermöglichen. Anstelle der Hakenelemente 58 können auch die Eingriffselemente 50 vorgesehen sein, in welche ein Vorsprung der Grundfläche 21 eingreift. Eine Grundfläche 21 mit Vorsprüngen ist zeichnerisch nicht dargestellt.

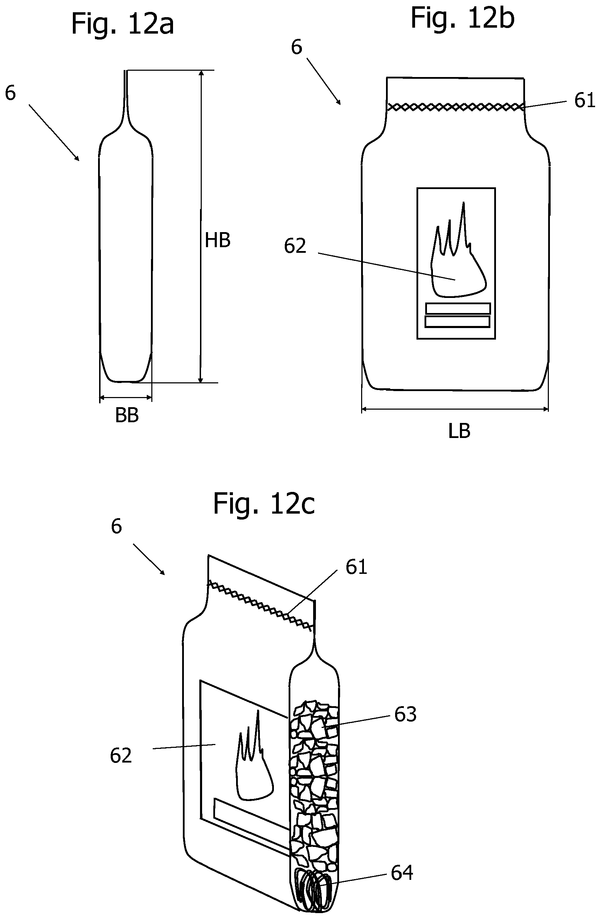

Die Fixierungselemente 20, welche das zweite Gehäuseelement 2 im ersten Gehäuseelement 1 halten, müssen dementsprechend nicht gelöst werden. Insbesondere wenn gemäss diesem Ausführungsbeispiel keine Belüftungsöffnungen 29 in den Seitenflächen 14 oder 16 vorgesehen sind, sind die Fixierungselemente 20 im zusammengebauten Zustand schlecht zugänglich. Zudem kann der Innenraum bei vorgängigem Gebrauch des portablen Grillgeräts mit Russ oder anderen Verbrennungsrückständen verunreinigt sein, sodass sich eine Zerlegung des portablen Grillgeräts nicht empfiehlt, wenn keine entsprechende Reinigungsmöglichkeit zur Verfügung steht. Wenn das portable Grillgerät beispielsweise für eine mehrtägige Tour mehrmals benutzt werden soll, kann daher nach der ersten Benutzung die Grundfläche 21 entfernt werden. Allfällige Verbrennungsrückstände können entleert werden. Dann kann das portable Grillgerät wieder mit Brennstoff befüllt werden, vorteilhafterweise mittels einem Beutel 6, wie beispielsweise in Fig. 12a - Fig. 12c gezeigt.

Fig. 10f zeigt ein Detail der Grundfläche 21, welche ein Befestigungselement 57 für die Grundfläche 21 zeigt. Das Befestigungselement 57 ist insbesondere als eine Lasche ausgebildet. Ein erstes Ende des Befestigungselements 57 ist mit der Grundfläche 21 verbunden. Ein zweites Ende des Befestigungselements 57 ist als freies Ende ausgebildet. Das Befestigungselement 57 weist eine erste Krümmung auf, welche die Kante der Seitenfläche 25 umgreift sowie eine zweite Krümmung, welche in Richtung der Innenseite der Seitenfläche 25 ausgerichtet ist. In der Seitenfläche 25 ist hierzu das Einrastelement 51 ausgebildet, welches gemäss diesem Ausführungsbeispiel als rechteckförmige Öffnung ausgebildet ist. Das Befestigungselement 57 kann angenähert eine s-förmige Form aufweisen. Der Bogen der ersten Krümmung kann über die Kante der Seitenfläche 25 hinausragen. Gemäss diesem Ausführungsbeispiel ist das Befestigungselement 57 von aussen zugänglich und daher manipulierbar. Mit der Hand oder einem der Messer- oder Gabelelemente kann das Befestigungselement 57 angehoben werden, um das Befestigungselement 57 zu lösen, oder in den Innenraum der Seitenfläche 25 hineingedrückt werden, um die Fixierung zu arretieren.

Fig. 11a zeigt eine Ansicht eines ersten Gehäuseelements 1 gemäss einer der Fig. 9a-9e. Das erste Gehäuseelement 1 besteht gemäss diesem Ausführungsbeispiel aus einer Grundfläche 11 und einer Mantelfläche 12. Die Mantelfläche 12 enthält vier Seitenflächen 13, 14, 15, 16, die jeweils paarweise parallel zueinander angeordnet sind. Die Mantelfläche 12 spannt somit gemäss diesem Ausführungsbeispiel eine rechteckige Querschnittsfläche auf. Die Seitenfläche 13 weist eine Mehrzahl von Ausnehmungen 17 auf, welche gemäss dem vorliegenden Ausführungsbeispiel als Längsschlitze ausgebildet sind. Die Ausnehmungen 17 erstrecken sich mindestens über die Hälfte der Höhe h. Die Ausnehmungen können auch einen nicht-rechteckigen Öffnungsquerschnitt aufweisen. Die Ausnehmungen können beispielsweise Stege enthalten. Alternativ können die Ausnehmungen auch als Löcher ausgebildet sein. Insbesondere kann der Öffnungsanteil der Ausnehmungen 17 in Richtung der Höhe h mindestens 50 % betragen, vorteilhafterweise mindestens 60% betragen.

Der Öffnungsanteil der Ausnehmungen 17 in Richtung der Länge l kann mindestens 30% betragen. Insbesondere kann der Öffnungsanteil der Ausnehmungen 17 in Richtung der Länge l mindestens 40% betragen.

Die der Seitenfläche 13 gegenüberliegende Seitenfläche 15 kann Belüftungsöffnungen 29 aufweisen. Gemäss Fig. 11a weist die Seitenfläche 15 drei Belüftungsöffnungen 29 auf, die als Längsschlitze ausgebildet sind. Die Belüftungsöffnungen 29 können parallel zueinander angeordnet sein. Die Belüftungsöffnungen 29 können geschlossen sein, wenn sich das erste Gehäuseelement 1 im Innenraum des zweiten Gehäuseelements 2 befindet. Werden das zweite Gehäuseelement 2 und das erste Gehäuseelement 1 auseinandergezogen, können die Belüftungsöffnungen 29 je nach der Position des ersten Gehäuseelements 1 im zweiten Gehäuseelement 2 teilweise geöffnet oder geschlossen sein. Das heisst insbesondere, dass die Luftzufuhr zu einem im ersten und zweiten Gehäuseelement 1, 2 befindlichen Brennstoffs stufenweise geregelt werden kann. Zusätzlich kann Luft über die Ausnehmungen 17 in den Innenraum gelangen, wenn das erste und zweite Gehäuseelement 1, 2 zumindest teilweise auseinandergezogen sind.

Eine Öffnung 28 ist in der Nähe der Grundfläche 11 in der Seitenfläche 16 angeordnet. Diese Öffnung 28 kann verschliessbar sein, beispielsweise durch ein Türelement. Auch die Seitenfläche 14 kann mindestens eine Öffnung 28 enthalten, was in Fig. 11a angedeutet ist, da die Seitenfläche 14 teilweise durch die Seitenfläche 13 verdeckt ist. Diese Öffnung kann dazu dienen, den Innenraum des ersten Gehäuseelements 1 mit Brennstoff zu füllen oder Verbrennungsrückstände, wie beispielsweise Asche, zu entfernen.

Die Öffnung 28 kann nach einem Ausführungsbeispiel eine Halterung 30 enthalten. Die Halterung 30 dient der Aufnahme des Brennstoffs. Die Halterung 30 ragt in den Innenraum des ersten Gehäuseelements 1 hinein. Im stehenden Zustand des portablen Grillgeräts 10 liegt der Brennstoff nicht oder nicht vollständig auf der Grundfläche 11 auf, sondern wird von der Halterung 30 gehalten. Die Halterung 30 kann eine Öffnung enthalten, durch welche ein Anzündmittel in das erste Gehäuseelement 1 eingebracht werden kann. Das Anzündmittel befindet sich gemäss diesem Ausführungsbeispiel unterhalb des Brennstoffs, sodass der Brennstoff sehr einfach entzündet werden kann. Idealerweise wird das Anzündmittel durch die Halterung zumindest teilweise in einem Abstand zur Grundfläche 11 gehalten, sodass es gut mit einem Feuerzeug entzündet werden kann. Das Anzündmittel enthält einen leicht entzündbaren oder entflammbaren Feststoff, beispielsweise Holzwolle oder einen Anzündblock, insbesondere Anzündwürfel. Insbesondere kann auch die Sauerstoffzufuhr durch die Öffnung 28 und die Halterung 30 verbessert werden, da Sauerstoff von aussen und von unten zum Brennstoff zugeführt werden kann, insbesondere wenn sich das portable Grillgerät in der stehenden Position befindet.

Die Seitenfläche 15 kann ein Fixierungselement 20 enthalten. Das Fixierungselement 20 kann als Lasche ausgebildet sein, welche von der Oberfläche der Seitenfläche 13 absteht. Die Lasche kann biegbar sein, sodass sie auf der Innenwand des zweiten Gehäuseelements 2 aufliegen kann, wenn das zweite Gehäuseelement 2 sich über dem ersten Gehäuseelement 1 befindet. Die Lasche kann insbesondere elastisch sein oder ein elastisches Material enthalten, sodass sie sich an der Innenwand des zweiten Gehäuseelements 2 abstützen kann, um das zweite Gehäuseelement 2 derart im ersten Gehäuseelement 1 zu halten, dass ein versehentliches Trennen des ersten Gehäuseelements 1 vom zweiten Gehäuseelement 2 soweit erschwert ist, dass ein versehentliches Verschütten von insbesondere heissem Brennstoff verhindert werden kann, weil sich das erste und zweite Gehäuseelement 1, 2 durch das Fixierungselement 20 sowie die korrespondierende Fixierungselemente 20 gemäss einer der Fig. 10a bis 10e derart fixiert werden, dass eine Trennung des ersten Gehäuseelements 1 vom zweiten Gehäuseelement 2 insbesondere während eines Aufheizvorgangs oder eines Grillvorgangs nicht erfolgen kann. Andererseits kann das Gehäuseelement 1 mittels des Fixierungselements 20 in jeder gewünschten ausgezogenen Position in Bezug auf das Gehäuseelement 2 gehalten werden.

Fig. 11a zeigt eine Ansicht des ersten Gehäuseelements 1, welche die Deckfläche zeigt, die offen ist. Daher kann in Fig. 11a der Innenraum des ersten Gehäuseelements 1 teilweise sichtbar sein. Die Seitenfläche 14, die teilweise sichtbar ist, sowie die Seitenfläche 16 enthalten gemäss diesem Ausführungsbeispiel keine Belüftungsöffnung 29.

Fig. 11b zeigt eine Aufsicht des ersten Gehäuseelements 1 gemäss Fig. 11a, welche die Seitenfläche 13 mit den Ausnehmungen 17 zeigt. Gemäss dem vorliegenden Ausführungsbeispiel sind fünf Ausnehmungen 17 parallel zueinander angeordnet. Ein Teil der Ausnehmungen 17 weist dieselbe Querschnittsfläche auf. Die Querschnittsflächen der den Seitenflächen 14 bzw. 16 nächstgelegenen Ausnehmungen 17 unterscheiden sich von den restlichen Ausnehmungen. Die Ausnehmungen 17 sind gemäss dem vorliegenden Ausführungsbeispiel symmetrisch in Bezug auf die parallel zur Höhe h verlaufende Mittenebene, welche die Halbierende der Länge l ausbildet. Die Ausnehmungen 17 können insbesondere derart angeordnet sein, dass sie nicht mit den Ausnehmungen 27 des zweiten Gehäuseelements 2 überlappen, sodass die Seitenfläche 13 im zusammengeschobenen Zustand des ersten und zweiten Gehäuseelements 1, 2 für die Luftzufuhr geschlossen ist. Insbesondere kann auch ein im Gehäuseelement 1 befindlicher Brennstoff in dieser Konfiguration nicht aus dem Gehäuseelement 2 herausfallen, insbesondere wenn das erste Gehäuseelement 1 auf seiner Grundfläche 11 steht und die Deckfläche des zweiten Gehäuseelements 2 die Grundfläche 11 einschliesst oder unmittelbar angrenzend an die Grundfläche 11 angeordnet ist.

Fig. 11c zeigt eine Seitenansicht des ersten Gehäuseelements 1 gemäss Fig. 11a, welche die Seitenfläche 16 zeigt. Die Seitenfläche 16 enthält gemäss dem vorliegenden Ausführungsbeispiel eine Öffnung 28, welche in dieser Darstellung verschlossen ist. Die Seitenfläche 15 weist gemäss diesem Ausführungsbeispiel zumindest ein Fixierungselement 20 auf, welches als Lasche ausgebildet ist.

Ein System zum Garen von Lebensmitteln umfasst insbesondere ein portables Grillgerät 10 nach einem der vorhergehenden Ausführungsbeispiele sowie einen Beutel 6, welcher zur Aufnahme des Brennstoffs ausgebildet ist.

Fig. 12a zeigt eine Seitenansicht eines Beutels 6 nach einem Ausführungsbeispiel. Der Beutel 6 kann insbesondere brennbar sein oder ein brennbares Material und den Brennstoff enthalten. Der Beutel 6 kann in den Innenraum des Mantelelement 12 eingelegt werden, bevor das Mantelelement 12 in das Mantelelement 22 eingeschoben wird.

Fig. 12b zeigt eine Ansicht der Vorderseite des Beutels 6 gemäss Fig. 12a. Der Beutel 6 kann eine Öffnung aufweisen, die zur Aufnahme eines Brennstoffs oder eines Anzündmittels ausgebildet ist, welche durch ein Verschlusselement 61 nach der Befüllung verschlossen werden kann. Das Verschlusselement 61 kann ein Element aus der Gruppe der Nähte, der Klebeverbindungen, der Versiegelungen, der Zugmittel umfassen. Der Beutel 6 kann ein Informationselement 62 umfassen. Ein Informationselement 62 kann ein Element aus der Gruppe der Drucke, Stempel, Klebeelemente umfassen. Das Informationselement 62 kann ein Logo, eine Bedienungsanleitung, einen Farbcode enthalten, welcher dem Benutzer Informationen über den Inhalt oder den bestimmungsgemässen Gebrauch des Beutels liefern kann.

Fig. 12c zeigt einen Beutel 6 in einer teilweise aufgeschnittenen Ansicht. Der Beutel 6 enthält einen Brennstoff 63, beispielsweise Holzkohle oder Briketts sowie ein Anzündmittel 64. Wird die Flamme eines Streichholzes, Feuerzeugs oder dergleichen mit dem Beutel in Kontakt gebracht, entzündet sich der Beutel 6 oder das Anzündmittel 64. Mit Hilfe des Anzündmittels 64 wird der Brennstoff 63 entzündet. Der Beutel 6 befindet sich vor dem Anzünden bereits im Innenraum des portablen Grillgeräts 10, was zeichnerisch nicht dargestellt ist. Der Beutel 6 kann eine Höhe HB, eine Breite BB und eine Länge LB aufweisen. Die Höhe H ist der Normalabstand zwischen den Boden und der verschlossenen Einfüllöffnung. Die Höhe HB ist kleiner als die Höhe h des ersten Gehäuseelements 1, die Breite BB ist kleiner als die Breite b des ersten Gehäuseelements 1, die Länge LB ist kleiner als die Länge l des ersten Gehäuseelements 1. Die Höhe HB beträgt insbesondere maximal 140 mm, vorzugsweise maximal 120 mm. Gemäss einem Ausführungsbeispiel beträgt die Länge LB maximal 140 mm, vorzugsweise maximal 120 mm. Gemäss einem Ausführungsbeispiel beträgt die Breite BB maximal 90 mm, vorzugsweise maximal 70 mm.

Das System kann ein Messerelement 4 und ein Gabelelement 3 enthalten, die zusammensteckbar sind, sodass aus dem Messerelement 4 und dem Gabelelement 3 eine Grillzange ausgebildet werden kann. Insbesondere können die Länge des Messerelements und die Länge des Gabelelements maximal der Höhe der Mantelfläche 22 entsprechen. Die Breite des Gabelelements kann im Wesentlichen der Breite B der Mantelfläche entsprechen. Das Messerelement 4 und das Gabelelement 3 können somit im Transportzustand an die Oberfläche des die Mantelfläche 22 ausbildenden Mantelelements angelegt werden. Für das Messerelement 4 und das Gabelelement 3 muss somit kein zusätzlicher Stauraum für den Transport vorgesehen werden.

Für den Fachmann ist offensichtlich, dass viele weitere Modifikationen zusätzlich zu den beschriebenen Ausführungsbeispielen möglich sind, ohne vom erfinderischen Konzept abzuweichen. Der Gegenstand der Erfindung wird somit durch die vorangehende Beschreibung nicht eingeschränkt und ist durch den Schutzbereich bestimmt, der durch die Ansprüche festgelegt ist. Für die Interpretation der Ansprüche oder der Beschreibung ist die breitest mögliche Lesart der Ansprüche massgeblich. Insbesondere sollen die Begriffe "enthalten" oder "beinhalten" derart interpretiert werden, dass sie sich auf Elemente, Komponenten oder Schritte in einer nicht-ausschliesslichen Bedeutung beziehen, wodurch angedeutet werden soll, dass die Elemente, Komponenten oder Schritte vorhanden sein können oder genutzt werden können, dass sie mit anderen Elementen, Komponenten oder Schritten kombiniert werden können, die nicht explizit erwähnt sind. Wenn die Ansprüche sich auf ein Element oder eine Komponente aus einer Gruppe beziehen, die aus A, B, C... N Elementen oder Komponenten bestehen kann, soll diese Formulierung derart interpretiert werden, dass nur ein einziges Element dieser Gruppe erforderlich ist, und nicht eine Kombination von A und N, B und N oder irgendeiner anderen Kombination von zwei oder mehr Elementen oder Komponenten dieser Gruppe.

## Patentansprüche

1. Portables Grillgerät (10) umfassend ein erstes Gehäuseelement (1) und ein zweites Gehäuseelement (2) zur Aufnahme eines Brennstoffs (63), wobei das erste Gehäuseelement (1) in das zweite Gehäuseelement (2) einschiebbar ist, **dadurch gekennzeichnet, dass** das erste Gehäuseelement (1) und das zweite Gehäuseelement (2) je eine Seitenfläche (13, 23) zur Auflage von Grillgut aufweisen, sodass im zumindest teilweise ausgeschobenen Zustand die Seitenfläche (13) des ersten Gehäuseelements (1) um den Anteil, um welchen das erste Gehäuseelement (1) aus dem zweiten Gehäuseelement (2) ausgeschoben ist, vergrössert ist.

2. Das portable Grillgerät (10) nach Anspruch 1, wobei das erste und zweite Gehäuseelement (1, 2) einen Innenraum aufweisen, der einen Brennstoff enthalten kann, wobei der Innenraum zur Verteilung des Brennstoffs vergrössert ist, wenn sich das erste Gehäuseelement (1) und das zweite Gehäuseelement (2) im zumindest teilweise ausgeschobenen Zustand befinden.

3. Das portable Grillgerät (10) nach einem der Ansprüche 1 oder 2, welches im eingeschobenen Zustand des ersten und zweiten Gehäuseelements (1, 2) ein minimales Volumen aufweist und im zumindest teilweise ausgeschobenen Zustand ein grösseres Volumen als das minimale Volumen aufweist.

4. Das portable Grillgerät (10) nach einem der vorhergehenden Ansprüche, wobei das erste und zweite Gehäuseelement (1, 2) im ausgeschobenen Zustand mittels eines Fixierungselements (20) arretierbar sind.

5. Das portable Grillgerät (10) nach einem der vorhergehenden Ansprüche, wobei das erste Gehäuseelement (1) und das zweite Gehäuseelement (2) eine Grundfläche (11, 21) sowie eine Mantelfläche (12, 22) aufweisen.

6. Das portable Grillgerät (10) nach einem der vorhergehenden Ansprüche, wobei eine der Seitenflächen (13, 23) eine Mehrzahl von Ausnehmungen (17, 27) enthält.

7. Das portable Grillgerät (10 nach Anspruch 6, wobei das Fixierungselement (20) zum Eingriff in zumindest eine der Ausnehmungen (27) der Seitenfläche (23) oder in eine zusätzliche Öffnung des zweiten Gehäuseelements (2) bestimmt ist.

8. Das portable Grillgerät (10) nach einem der vorhergehenden Ansprüche, wobei eine der Seitenflächen (14, 16) eine Öffnung (28) enthält, welche zur Zufuhr oder zur Entnahme eines Brennstoffs oder eines Brennstoffrückstands ausgebildet ist, welche verschliessbar sein kann oder eine Belüftungsöffnung (29) enthält.

9. Das portable Grillgerät (10) nach einem der vorhergehenden Ansprüche, wobei das zweite Gehäuseelement (2) eine Höhe H, eine Breite B und eine Länge L aufweist, wobei die Höhe H maximal 150 mm, vorzugsweise maximal 120 mm beträgt oder wobei die Länge L maximal 150 mm, vorzugsweise maximal 120 mm beträgt oder wobei die Breite B maximal 100 mm, vorzugsweise maximal 70 mm beträgt.

10. System zum Garen von Lebensmitteln umfassend ein portables Grillgerät (10) nach einem der vorhergehenden Ansprüche sowie einen Beutel (6), welcher zur Aufnahme des Brennstoffs ausgebildet ist.

11. System nach Anspruch 10, wobei der Beutel (6) ein Anzündmittel (64) und den Brennstoff (63) enthält.

12. System nach einem der Ansprüche 10 oder 11, wobei der Beutel (6) in das erste Gehäuseelement (1) einlegbar ist.

13. System nach einem der Ansprüche 10 bis 12, wobei der Brennstoff (63), insbesondere der Beutel (6) vom ersten und zweiten Gehäuseelement (1, 2) umschliessbar ist.

14. System nach einem der Ansprüche 10 bis 13, wobei das System ein Messerelement (4) und ein Gabelelement (3) enthält.

15. System nach Anspruch 14, wobei das Messerelement (4) und das Gabelelement (3) zusammensteckbar sind, sodass aus dem Messerelement (4) und dem Gabelelement (3) eine Grillzange gebildet werden kann.

## Claims

1. Portable grill device (10) comprising a first housing element (1) and a second housing element (2) for receiving a fuel (63), wherein the first housing element (1) can be inserted into the second housing element (2), **characterized in that** the first housing element (1) and the second housing element (2) each have a side surface (13, 23) for depositing food to be grilled, so that in the at least partially extended state the side surface (13) of the first housing element (1) is enlarged about the portion of the first housing element (1) being extended with respect to the second housing element (2).

2. The portable grill device (10) of claim 1, wherein the first and second housing elements (1, 2) comprise an interior space which may contain a fuel, wherein the interior space for distributing the fuel is increased when the first housing element (1) and the second housing element (2) are in the at least partially extended state.

3. The portable grill device (10) of one of claims 1 or 2, which the first and second housing element (1, 2) have a minimum volume in the retracted state and a larger volume than the minimum volume in the at least partially extended state.

4. The portable grill device (10) of one of the preceding claims, wherein the first and second housing element (1, 2) can be locked in the extended state by means of a fixing element (20).

5. The portable grill device (10) of one of the preceding claims, wherein the first housing element (1) and the second housing element (2) have a base surface (11, 21) and a jacket surface (12, 22).

6. The portable grill device (10) of one of the preceding claims, wherein one of the side surfaces (13, 23) includes a plurality of recesses (17, 27).

7. The portable grill device (10) of claim 6, wherein the fixing element (20) is configured to engage in at least one of the recesses (27) of the side surface (23) or in an additional opening of the second housing element (2).

8. The portable grill device (10) of one of the preceding claims, wherein one of the side surfaces (14, 16) includes an opening (28) adapted for the supply or removal of a fuel or fuel residue which may be closable or contain a ventilation opening (29).

9. The portable grill device (10) of one of the preceding claims, wherein the second housing element (2) has a height H, a width B and a length L, wherein the height H amounts to at most 150 mm, preferably at most 120 mm, or wherein the length L amounts to a maximum of 150 mm, preferably a maximum of 120 mm, or wherein the width B amounts to a maximum of 100 mm, preferably a maximum of 70 mm.

10. A system for cooking food comprising a portable grill device (10) of one of the preceding claims and a bag (6) which is designed to receive the fuel.

11. The system of claim 10, wherein the bag (6) includes an igniter (64) and the fuel (63).

12. The system of one of claims 10 or 11, wherein the bag (6) can be inserted into the first housing element (1).

13. The system of one of claims 10 to 12, wherein the fuel (63), in particular the bag (6), can be enclosed by the first and second housing element (1, 2).

14. The system of one of claims 10 to 13, wherein the system includes a knife element (4) and a fork element (3).

15. The system of claim 14, wherein the knife element (4) and the fork element (3) can be coupled, such that a barbecue tongs can be formed from the knife element (4) and the fork element (3).

## Revendications

1. Dispositif de gril portable (10) comprenant un premier élément de boîtier (1) et un deuxième élément de boîtier (2) destiné à recevoir un combustible (63), le premier élément de boîtier (1) pouvant être inséré dans le deuxième élément de boîtier (2), **caractérisé en ce que** le premier élément de boîtier (1) et le deuxième élément de boîtier (2) présentent chacun une surface latérale (13, 23) servant à poser des aliments à griller, de sorte que, dans l'état au moins partiellement prolongé, la surface latérale (13) du premier élément de boîtier (1) est agrandi par rapport à la partie du premier élément de boîtier (1) étant tiré hors du deuxième élément de boîtier (2).

2. Dispositif de gril portable (10) selon la revendication 1, dans lequel le premier et deuxième élément de boîtier (1, 2) ont un espace intérieur pouvant contenir un carburant, dans lequel l'espace intérieur pour distribuer le carburant est augmenté lorsque le premier élément de boîtier (1) et le deuxième élément de boîtier (2) sont à l'état au moins partiellement prolongé.

3. Dispositif de gril portable (10) selon l'une des revendications 1 ou 2, en ce que le premier et deuxième élément de boîtier (1, 2) présentent un volume minimal à l'état rétracté et à l'état au moins partiellement prolongé, ils présentent un volume supérieur au volume minimal.

4. Dispositif de gril portable (10) selon l'une des revendications précédentes, dans lequel le premier et deuxième élément de boîtier (1, 2) à l'état prolongé peuvent être verrouillés par un élément de fixation (20).

5. Dispositif de gril portable (10) selon l'une des revendications précédentes, dans lequel le premier élément de boîtier (1) et le deuxième élément de boîtier (2) ont une surface de base (11, 21) et une surface d'enveloppe (12, 22).

6. Dispositif de gril portable (10) selon l'une des revendications précédentes, dans lequel l'une des surfaces latérales (13, 23) comprend une pluralité d'évidements (17, 27).

7. Dispositif de gril portable (10) selon la revendication 6, dans lequel l'élément de fixation (20) est destiné à s'engager dans au moins l'un des évidements (27) de la surface latérale (23) ou dans une ouverture supplémentaire du deuxième élément de boîtier (2).

8. Dispositif de gril portable (10) selon l'une des revendications précédentes, dans lequel l'une des surfaces latérales (14, 16) comprend une ouverture (28) adaptée pour fournir ou éliminer un carburant ou des résidus de carburant qui peut être fermée ou contenir une ouverture de ventilation (29).

9. Dispositif de gril portable (10) selon l'une des revendications précédentes, dans lequel le deuxième élément de boîtier (2) a une hauteur H, une largeur B et une longueur L, dans lequel la hauteur H est d'au maximum de 150 mm, de préférence d'au maximum de 120 mm, ou la longueur L est au maximum de 150 mm, de préférence au maximum de 120 mm, ou la largeur B est au maximum de 100 mm, de préférence au maximum de 70 mm.

10. Système de cuisson d'aliments comprenant un dispositif de gril portable (10) selon l'une des revendications précédentes et un sac (6) conçu pour recevoir le combustible.

11. Système selon la revendication 10, dans lequel le sac (6) comprend un allumeur (64) et le carburant (63).

12. Système selon l'une des revendications 10 ou 11, dans lequel le sac (6) peut être inséré dans le premier élément de boîtier (1).

13. Système selon l'une des revendications 10 à 12, dans lequel le carburant (63), en particulier le sac (6), peut être enfermé par des premier et deuxièmes éléments de boîtier (1, 2).

14. Système selon l'une des revendications 10 à 13, dans lequel le système comprend un élément de couteau (4) et un élément de fourchette (3).

15. Système selon la revendication 14, dans lequel l'élément de couteau (4) et l'élément de fourchette (3) sont assemblables, de sorte que l'on peut former une pince de barbecue à partir de l'élément de couteau (4) et de l'élément de fourchette (3).
